(19) Europäisches Patentamt / European Patent Office / Office européen des brevets

(11) **EP 2 913 478 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(51) Int Cl.:
*F01D 5/14* (2006.01)   *F04D 29/32* (2006.01)
*F01D 1/06* (2006.01)   *F01D 5/02* (2006.01)
*F04D 29/54* (2006.01)

(21) Anmeldenummer: **15156104.0**

(22) Anmeldetag: **23.02.2015**

(54) **TANDEMSCHAUFEL EINER STRÖMUNGSMASCHINE**

TANDEM BLADES OF A TURBO-MACHINE

AUBES EN TANDEM D'UNE TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014 DE 102014203607**

(43) Veröffentlichungstag der Anmeldung:
**02.09.2015 Patentblatt 2015/36**

(73) Patentinhaber: **Rolls-Royce Deutschland Ltd & Co KG**
**15827 Blankenfelde-Mahlow (DE)**

(72) Erfinder: **Grümmer, Volker, Dr.**
**85411 Hohenkammer (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A1- 2 626 514   EP-A2- 2 261 463**
**EP-A2- 2 463 480   DE-A1-102009 013 399**

EP 2 913 478 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Schaufelreihengruppe gemäß dem Oberbegriff des Anspruchs 1.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Der Stand der Technik hält für den Fall hoher aerodynamischer Belastung und starken Grenzschichtwachstums auf den Ringkanalseitenwänden (Nabe oder Gehäuse) nur bedingt Lösungen bereit.

Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Eine derartige Strömungsmaschine ist beispielsweise aus der EP 2 261 463 A2 bekannt. Bei diesen Anordnungen, und insbesondere bei denen, die mehrere direkt benachbarte und relativ zueinander fest angeordnete Schaufelreihen aufweisen (also beispielsweise mehrere Rotorschaufelreihen auf der selben Trommel oder mehrere Statorschaufelreihen), ergeben sich bei höherer aerodynamischer Belastung starke Grenzschichtablösung in der Randzone des Hauptströmungspfades, d. h. an der Naben- oder der Gehäusekontur.

Dies ist primär darauf zurückzuführen, dass die in der Mitte des Hauptströmungspfades günstige Anordnung zweier benachbarter Schaufelkanten einer Schaufelreihengruppe zueinander sich in der Nähe der Strömungspfadberandung ungünstig auswirkt. Die erforderliche Strömungsumlenkung kann entweder in Teilen der Schaufelhöhe oder entlang der gesamten Schaufelhöhe schnell so hoch sein, dass diese konventionelle Anordnung zu frühzeitiger Ablösung der Grenzschichtströmung in den Randbereichen des Hauptströmungspfades an Naben- und/oder Gehäusewänden führt.

Aus der US 2013/0209223 A1 ist es bekannt, die meridionale Überlappung zwischen vorderen und hinteren Schaufeln einer Schaufelreihengruppe zwischen der Mitte des Hauptströmungspfades und der Hauptströmungspfadberandung zu variieren. Aus der US 2013/0209224 A1 ist es bekannt, den Grad der Überlappung zwischen vorderen und hinteren Schaufeln einer Schaufelreihengruppe sowie den Abstand einer vorderen zu einer hinteren Schaufel zwischen der Mitte des Hauptströmungspfades und der Hauptströmungspfadberandung zu variieren.

Eine Variation der Überlappung und des Abstandes ergibt sich üblicherweise bei jeder Realisierung einer Schaufelreihengruppe, ohne dass dabei zwangsläufig eine vorteilhafte Beeinflussung der Strömung erreicht würde. Die US 2013/0209223 A1 und US 2013/0209224 A1 beschreiben unterschiedlichste Möglichkeiten der Variation, ohne dass dabei aerodynamisch bedeutsame Parameter herangezogen werden. Auch werden keine Aussagen zu der genauen Gestalt der Schaufelkanten im Interferenzbereich zweier benachbarter Mitgliedschaufelreihen gemacht. Die Gestalt der Schaufelkanten im Interferenzbereich zweier benachbarter Mitgliedschaufelreihen ist jedoch von entscheidender Bedeutung für eine günstige Beeinflussung des Gesamtströmungsverhaltens. Die US 2013/0209223 A1 behandelt den Kantenabstand benachbarter Mitgliedschaufelreihen in der Meridionalebene (Maschinenseitenansicht). Die Strömungsrichtung in Schaufelreihen verläuft aber mit einer teils erheblichen Strömungsdrallkomponente, sodass die Beschaufelung teils erheblich gegen die Meridionalrichtung angestellt ist. Entscheidend für das aerodynamische Verhalten ist eine Festschreibung der Schaufelkanten senkrecht und parallel zur Schaufelprofilsehne.

Eine in der Meridionalebene sichtbare Schaufelkante kann also durch unendlich viele unterschiedliche in den aerodynamisch relevanten Sehnen- und Sehnenorthogonalrichtungen festgelegte Schaufelkantenformen generiert werden. Sie kann somit die Gestalt der Schaufelkanten nicht eindeutig beschreiben und demzufolge auch nicht die aerodynamische Problemstellung einer vorteilhaften Strömungsbeeinflussung lösen.

Der vorliegenden Erfindung liegt die Aufgabe zu Grunde, eine Schaufelreihengruppe bereitzustellen, die durch die Festlegung aerodynamisch relevanter Merkmale und Parameterbeziehungen sowohl im mittleren Bereich als auch in den Randbereichen des Hauptströmungspfades ein günstiges Strömungsverhalten realisiert.

Diese Aufgabe wird erfindungsgemäß durch eine Schaufelreihengruppe mit den Merkmalen des Anspruchs 1 gelöst.

Danach stellt die erfindungsgemäße Lösung eine Schaufelreihengruppe bestehend aus mindestens zwei benachbarten und relativ zueinander fest angeordneten Schaufelreihen (i) und (i+1) (mehrere miteinander rotierende Rotorschaufelreihen oder mehrere Statorschaufelreihen) bereit, die in einem Hauptströmungspfad einer Strömungsmaschine anordbar sind. Dabei ist in einem an wenigstens eine der Hauptströmungspfadberandungen (Nabe und Gehäuse) angrenzenden Bereich der Schaufelhöhe die Vorderkante mindestens einer Schaufel der Mitgliedsschaufelreihe (i+1) derart in der Umgebung einer Schaufel der Mitgliedsschaufelreihe (i) vorgesehen, dass zwischen der Druckseite der Schaufel (i) und der Saugseite der Schaufel (i+1) eine Nebenpassage ausgebildet ist, wodurch eine zusätzliche Strömungsführung und eine erhöhte Ausnutzung der Potentialeffekte im aerodynamisch wichtigen Interferenzbereich der beiden Mitgliedschaufelreihen erreicht wird.

Erfindungsgemäß ist vorgesehen, dass eine relative Nebenpassagenlänge v' und eine relative Nebenpassagenweite w' jeweils wenigstens in einem Teil des Bereiches zwischen der mittleren Meridionalstromlinie SLM und wenigstens einer der Hauptströmungspfadberandungen HB zur Hauptströmungspfadberandung (HB) hin ansteigt, wobei die Werte der relativen Nebenpassagenlänge v' und der relativen Nebenpassagenweite w' jeweils an wenigstens einer Hauptströmungspfadberandung (HB) größer sind als an der mittleren Meridionalstromlinie (SLM) in Hauptströmungspfadmitte.

Erfindungsgemäß ist weiter vorgesehen, dass in einer Ansicht, die stromaufwärts und parallel zu einer ersten Koordinatenrichtung s eines Hilfskoordinatensystems im mittleren Meridionalstromlinienschaufelschnitt gerichtet ist, der Wölbungsgrad WGh2 der Hinterkantenlinie HK(i) der vorderen Schaufel (i) im Bereich zwischen der mittleren Meridionalstromlinie SLM und der Hauptströmungspfadberandung HB größer ist als der Wölbungsgrad WGp der saugseitigen Projektionslinie PLSS(i+1) der hinteren Schaufel (i+1).

Dabei ist der Wölbungsgrad WGh2 der Hinterkantenlinie HK(i) definiert als größter feststellbarer Abstand dh2 zwischen der Hinterkante HK(i) selbst und der geraden Verbindungslinie Lh2 ihrer Punkte an der mittleren Meridionalstromlinie SLM und an der Hauptströmungspfadberandung HB bezogen auf die meridionalstromflächenorthogonale Distanz dor an der Hinterkantenlinie HK(i) zwischen der Hauptströmungspfadberandung HB und der mittleren Meridionalstromlinie SLM, gemäß WGh2 = dh2 / dor. Weiter ist der Wölbungsgrad WGp der saugseitigen Projektionslinie PLSS(i+1) definiert als größter feststellbarer Abstand dp zwischen der Projektionslinie PLSS(i+1) selbst und der geraden Verbindungslinie Lp ihrer Punkte an der mittleren Meridionalstromlinie SLM und an der Hauptströmungspfadberandung HB bezogen auf die meridionalstromflächenorthogonale Distanz dor zwischen der Hauptströmungspfadberandung HB und der mittleren Meridionalstromlinie SLM, gemäß WGp = dp / dor.

Gemäß einer Ausgestaltung der Erfindung ist vorgesehen, dass die relative Nebenpassagenlänge v' in einem Bereich angrenzend an die Hauptströmungspfadberandung zur Hauptströmungspfadberandung hin durchgehend ansteigt. Eine alternative Ausgestaltung sieht vor, dass die relative Nebenpassagenlänge v' in einem Bereich angrenzend an die Hauptströmungspfadberandung im Wesentlichen oder exakt konstant verläuft. Eine weitere alternative Ausgestaltung sieht vor, dass die relative Nebenpassagenlänge v' in einem Bereich angrenzend an die Hauptströmungspfadberandung HB zur Hauptströmungspfadberandung HB hin abfallend verläuft.

Gemäß einer Ausgestaltung der Erfindung steigt die relative Nebenpassagenweite w' in einem Bereich angrenzend an die Hauptströmungspfadberandung HB zur Hauptströmungspfadberandung HB hin durchgehend an. Eine alternative Ausgestaltung sieht vor, dass die relative Nebenpassagenweite w' in einem Bereich angrenzend an die Hauptströmungspfadberandung HB im Wesentlichen oder exakt konstant verläuft. Eine weitere alternative Ausgestaltung sieht vor, dass die relative Nebenpassagenweite w' in einem Bereich angrenzend an die Hauptströmungspfadberandung HB zur Hauptströmungspfadberandung HB hin abfallend verläuft.

Eine weitere Ausgestaltung der Erfindung sieht vor, dass als Maß für die Stärke der strömungsmechanischen Interferenz zwischen einer vorderen Mitgliedschaufel (i) und einer hinteren Mitgliedschaufel (i+1) das Längen- Weiten-Verhältnis LWV der zwischen ihnen gebildeten Nebenpassage NP herangezogen wird, wobei das Längen-Weiten-Verhältnis als LWV = v/w definiert ist, der Wert von LWV im mittleren Meridionalstromlinienschnitt SLM mit LWVSLM bezeichnet ist und das relative Längen-Weiten-Verhältnis gemäß LWV' = LWV - LWVSLM definiert ist, wobei das relative Längen-Weiten-Verhältnis LWV' in einem überwiegenden Bereich angrenzend an den mittleren Meridionalstromlinienschnitt SLM innerhalb einer Toleranz von +/-0,25 konstant verläuft.

Dabei kann vorgesehen sein, dass das relative Längen-Weiten-Verhältnis LWV' in einem Bereich angrenzend an die Hauptströmungspfadberandung HB in Richtung der Hauptströmungspfadberandung HB stetig zunimmt.

Weitere Ausgestaltungen der Erfindung sind in den Unteransprüchen angegeben.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit einem festen oder einem freien Schaufelende mit Spalt ausgeführt sein können.

Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinanderfolgenden Rotoren. Schließlich kann die Strömungsmaschine alternativ eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung wird nachfolgend unter Bezugnahme auf die Figuren der Zeichnung anhand mehrerer Ausführungsbeispiele näher erläutert. Es zeigen:

Fig. 1:     mehrere Schaufelreihengruppen nach dem Stand der Technik,

Fig. 2a:    eine Übersicht über mehrere erfindungsgemäße Schaufelreihengruppen,

Fig. 2b:    eine Übersicht über weitere erfindungsgemäße Schaufelreihengruppen,

Fig. 3:     die Definition von Meridionalstromlinien,

Fig. 4a:    eine erfindungsgemäße Schaufelreihengruppe mit Umfangsbetrachtung,

Fig. 4b:    erfindungsgemäße Definitionen an einem Meridionalstromlinienschnitt,

Fig. 5a:    eine erfindungsgemäße qualitative Festlegung der relativen Nebenpassagenlänge,

Fig. 5b:    eine erfindungsgemäße quantitative Festlegung der relativen Nebenpassagenlänge,

Fig. 6a:    eine erfindungsgemäße qualitative Festlegung der relativen Nebenpassagenweite,

Fig. 6b:    eine erfindungsgemäße quantitative Festlegung der relativen Nebenpassagenweite,

Fig. 7a:    erfindungsgemäße Festlegungen der Vorderkante VK(i+1) der hinteren Schaufel und der Hinterkante HK(i) der vorderen Schaufel,

Fig. 7b:    weitere erfindungsgemäße Festlegungen der Vorderkante VK(i+1) der hinteren Schaufel und der Hinterkante HK(i) der vorderen Schaufel,

Fig. 7c:    weitere erfindungsgemäße Festlegungen der Vorderkante VK(i+1) der hinteren Schaufel und der Hinterkante HK(i) der vorderen Schaufel,

Fig. 8a:    erfindungsgemäße Festlegungen der Hinterkante HK(i) der vorderen Schaufel und der saugseitigen Projektionslinie PLSS (i+1) der hinteren Schaufel,

Fig. 8b:    weitere erfindungsgemäße Festlegungen der Hinterkante HK(i) der vorderen Schaufel und der saugseitigen Projektionslinie PLSS (i+1) der hinteren Schaufel, und

Fig. 8c:    weitere erfindungsgemäße Festlegungen der Hinterkante HK(i) der vorderen Schaufel und der saugseitigen Projektionslinie PLSS (i+1) der hinteren Schaufel.

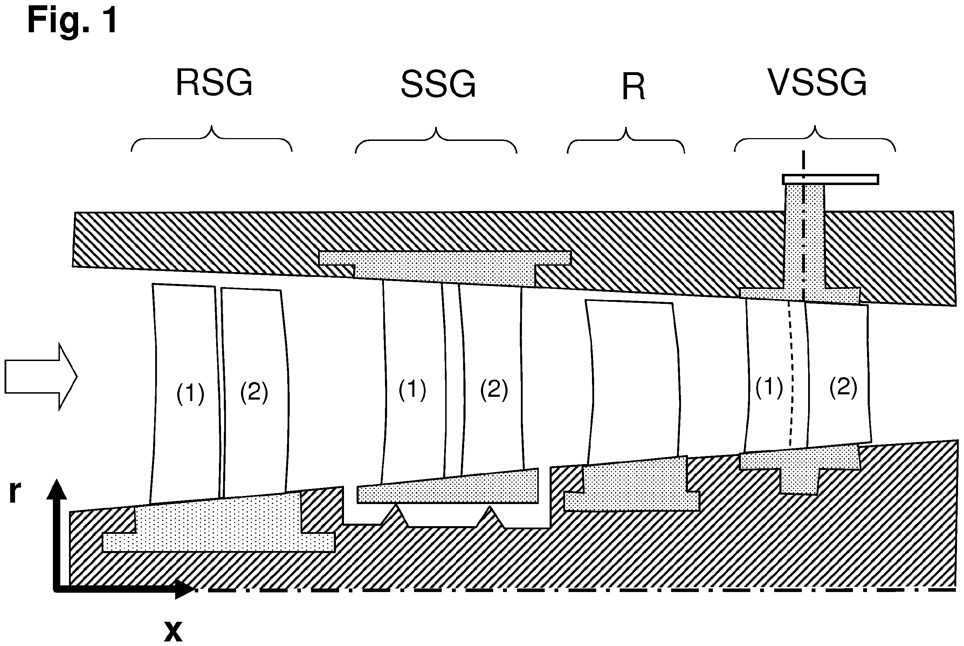

Eine konventionelle Schaufelreihengruppe nach dem Stand der Technik, wie sie in Fig. 1 gezeigt ist, besitzt etwa gleichbleibende Abstände zwischen den Schaufelkanten direkt benachbarter Mitglieder der Schaufelreihengruppe.

Die Fig. 1 zeigt in der durch die Axialrichtung x und die Radialrichtung r gebildeten Meridianebene mehrere Schaufelreihengruppen, wobei jede der Schaufelreihengruppen aus jeweils zwei gleichartigen und ihre relative Anordnung zueinander (sowohl in Umfangsrichtung als auch in Meridionalrichtung) nicht ändernden Mitgliedsschaufelreihen besteht. Es handelt sich also um doppelreihige Leiträder oder Laufräder.

So besteht eine Rotorschaufelreihengruppe RSG aus zwei mit gleicher Drehgeschwindigkeit laufenden und miteinander verbundenen Rotorschaufelreihen; das erste Mitglied der Gruppe ist mit (1) und das zweite Mitglied der Gruppe mit (2) gekennzeichnet. Eine Statorschaufelreihengruppe SSG besteht aus zwei direkt benachbarten feststehenden Statorschaufelreihen (1) und (2).

Eine variable Statorschaufelreihengruppe VSSG besteht aus zwei direkt benachbarten Statorschaufelreihen (1) und (2), wobei jeweils eine Schaufel der vorderen Reihe mit einer Schaufel der hinteren Reihe auf einem gemeinsamen Drehteller vorgesehen sind und auf diese Weise gemeinsam um die Drehachse verstellbar sind.

Allen Schaufelreihengruppen nach dem Stand der Technik ist gemeinsam, dass entweder die zwei Mitglieder der Schaufelreihengruppe mit großem Abstand voneinander angeordnet sind, oder aber die einzelnen Mitglieder eng zusammenstehen, in Profilsehnenrichtung und/oder Meridionalrichtung aber nicht überlappen und ein Abstand von "Hinterkante Mitglied (1)" zu "Vorderkante Mitglied (2)" im Wesentlichen gleichbleibend vorgesehen ist. Auch gehört der Begriff einer Überlappung und eine Variation einer Überlappung in Schaufelhöhenrichtung zum Stand der Technik, doch fehlt eine technische Lehre zur Festlegung der Schaufelkanten in den für die strömungstechnische Problemstellung relevanten Betrachtungsebenen, und/und es fehlen Leitlinien sowohl für eine Festlegung günstiger Variationen einer Überlappung als auch für eine Beziehung zwischen den zwei für die strömungspotentialtheoretische Interferenz dominierenden Größen Überlappung und Beabstandung der Profile einer Mitgliedschaufel (1) und einer Mitgliedschaufel (2). Die Lösungen nach dem Stand der Technik sind entweder augrund des Fehlens relevanter Kriterien nicht verwertbar oder sind für die Strömung in der Nähe der Hauptströmungspfadberandung (Nabe oder Gehäuse) sehr nachteilig.

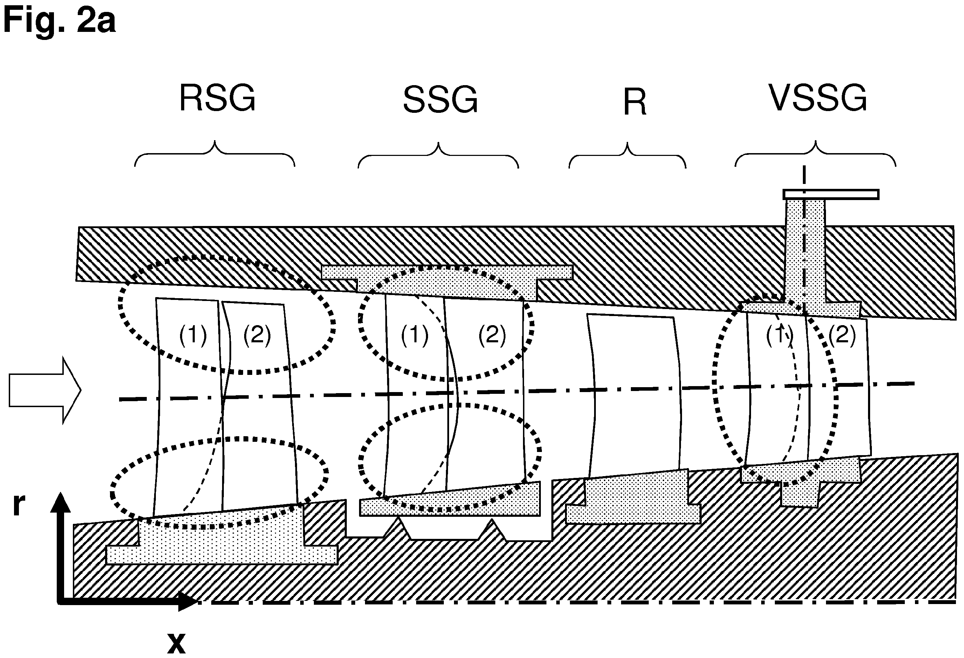

Die Fig. 2a zeigt in der durch die Axialrichtung x und die Radialrichtung r gebildeten Meridionalebene mehrere erfindungsgemäße Schaufelreihengruppen, wobei jede der Schaufelreihengruppen aus jeweils zwei gleichartigen und die Relativposition zueinander nicht ändernden Mitgliedsschaufelreihen besteht.

So besteht eine erfindungsgemäße Rotorschaufelreihengruppe RSG aus mindestens zwei mit gleicher Drehgeschwindigkeit laufenden und miteinander verbundenen Rotorschaufelreihen. Eine erfindungsgemäße Statorschaufelreihengruppe SSG besteht aus mindestens zwei direkt benachbarten feststehenden Statorschaufelreihen.

Eine erfindungsgemäße variable Statorschaufelreihengruppe VSSG besteht aus mindestens zwei direkt benachbarten Statorschaufelreihen. Eine Schaufel einer der Mitgliedsschaufelreihen ist hier mit mindestens einer Schaufel der ihr unmittelbar stromab liegenden Mitgliedsschaufelreihe auf einem gemeinsamen Drehteller vorgesehen. Alternativ können aber auch, wie hier nicht bildlich dargestellt, mindestens zwei, unterschiedlichen Mitgliedschaufelreihen zugehörige Schaufeln je auf einem individuellen Drehteller angeordnet sein.

Kennzeichnend für die erfindungsgemäße Schaufelreihengruppe ist es, dass in wenigstens einem an eine der Hauptströmungspfadberandungen (Nabe und Gehäuse) angrenzenden Bereich der Schaufelhöhe zwischen dem vorderen Abschnitt der Saugseite einer Schaufel einer Mitgliedsschaufelreihe (i+1) und dem hinteren Abschnitt der Druckseite einer Schaufel einer Mitgliedsschaufelreihe (i) eine Nebenpassage vorgesehen ist, die die Strömung örtlich führt und deren auf die Profiltiefe der Schaufelreihe (i) bezogenen Nebenpassagelänge in Richtung wenigstens einer der Hauptströmungspfadberandungen zunimmt, um das Interferenzverhalten der Mitgliedschaufelreihen (i) und (i+1) entlang der Schaufelhöhe günstig auf die Erfordernisse nahe der Hauptströmungspfadberandungen abzustimmen.

Dabei kann es sich, je nach Staffelungswinkel der Schaufelanordnung, in bestimmten Fällen ergeben, dass die Vorderkante der Schaufel der Reihe (i+1) in meridionaler Richtung betrachtet zwischen der Vorderkante und der Hinterkante der stromaufwärts liegenden Mitgliedsschaufelreihe (i) vorgesehen ist, und auch der meridionale Eingriff, gemessen von der Hinterkante der Mitgliedsschaufelreihe (i) zur Vorderkante der Mitgliedsschaufelreihe (i+1) und stromaufwärts positiv gezählt, in Richtung wenigstens einer der Hauptströmungspfadberandungen zunimmt. Es kann aber auch, insbesondere bei hohen Staffelungswinkeln der Schaufelanordnung, eine Nebenpassage gebildet sein, ohne dass ein meridionaler Eingriff vorliegt. Einige Beispielfälle mit und ohne meridionalen Eingriff sind in der Fig. 2a in den nahe an der Hauptströmungspfadberandung liegenden Zonen der Rotorschaufelreihengruppe RSG, der Statorschaufelreihengruppe SSG und der variablen Statorschaufelreihengruppe VSSG beispielhaft skizziert.

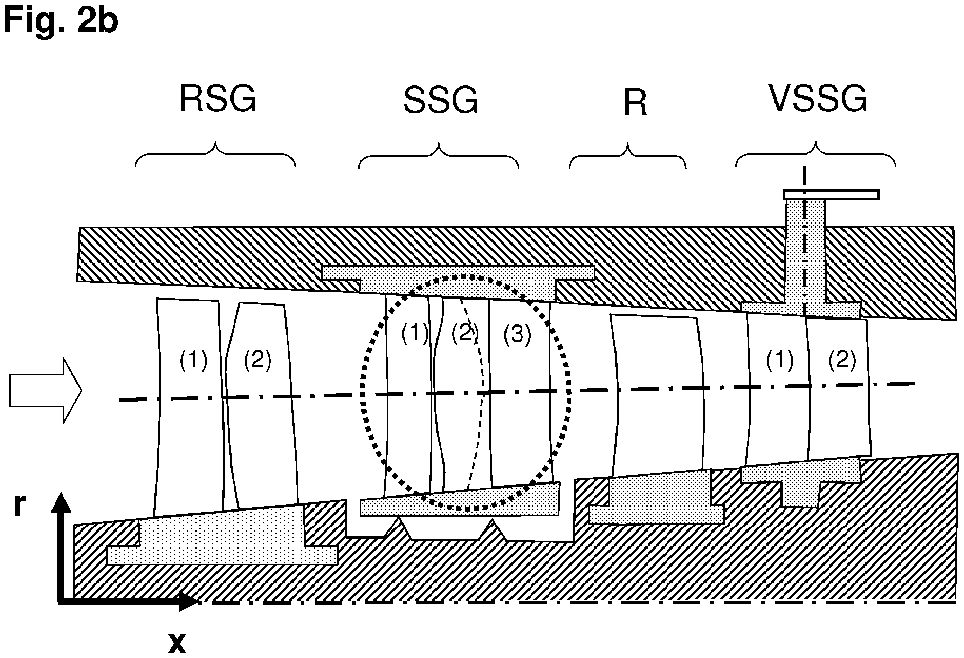

Wie in Fig. 2b gezeigt, kann die erfindungsgemäße Schaufelreihengruppe auch mehr als zwei Mitgliedsschaufelreihen besitzen, wie hier beispielhaft für die Anzahl 3 an der Statorschaufelreihengruppe SSG dargestellt ist. Wie hier nicht explizit dargestellt ist, kann auch eine Rotorschaufelreihengruppe RSG oder eine variable Statorschaufelreihengruppe mit mehr als 2 Mitgliedsschaufelreihen versehen sein.

Die beschriebene Konfiguration der Schaufelreihengruppe schließt die Möglichkeit ein, dass an mindestens einer Mitgliedsschaufelreihe der Abstand zwischen zwei benachbarten Schaufeln entlang des Umfangs variiert. Es kann auch günstig sein, wenn die axiale Position zweier benachbarter Schaufeln dieser Schaufelreihe entlang des Umfangs variiert. Es kann auch günstig sein, wenn die Profiltiefe zweier benachbarter Schaufeln dieser Schaufelreihe entlang des Umfangs variiert.

Es kann vorteilhaft sein, wenn die Anzahl der Schaufeln zweier benachbarter Mitgliedsschaufelreihen in einem besonderen Verhältnis stehen, das heißt, dass die Anzahl der Schaufeln der Mitgliedsschaufelreihe (i) ein Vielfaches der Anzahl der Schaufeln der Mitgliedsschaufelreihe (i+1) bildet, oder die Anzahl der Schaufeln der Mitgliedsschaufelreihe (i+1) ein Vielfaches der Anzahl der Schaufeln der Mitgliedsschaufelreihe (i) bildet, oder die Anzahl der Schaufeln der Mitgliedsschaufelreihe (i) und die Anzahl der Schaufeln der Mitgliedsschaufelreihe (i+1) gleich sind.

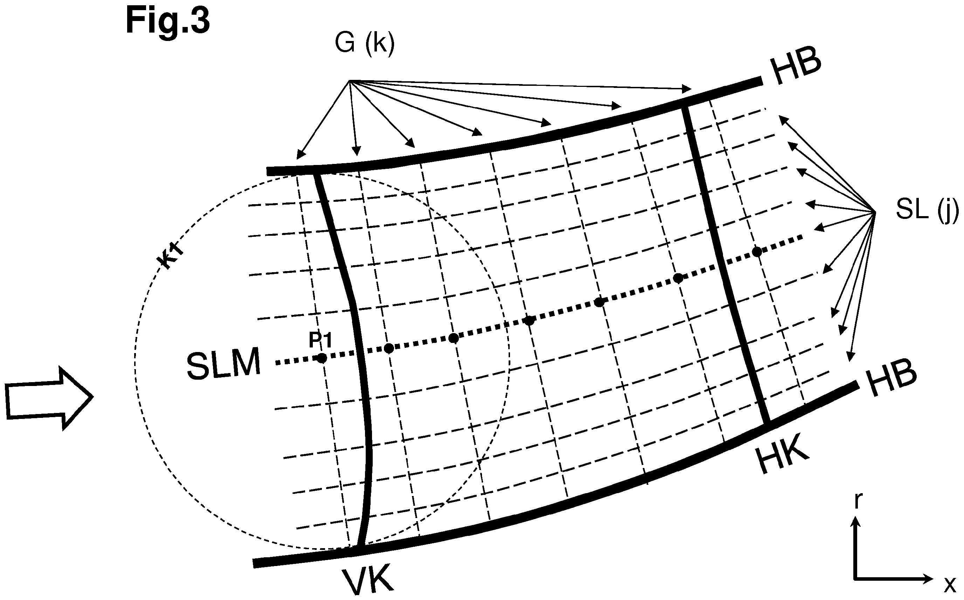

Die Fig. 3 zeigt zur Definition von Meridionalstromlinien einen Hauptströmungspfad einer Strömungsmaschine mit Durchströmung von links nach rechts (angezeigt durch den dicken Pfeil), in der durch die Axialkoordinate x und die Radialkoordinate r gebildeten Meridionalebene, wobei der Hauptströmungspfad durch die radial inneren Hauptströmungspfadberandung HB und die radial äußere Hauptströmungspfadberandung HB begrenzt wird. Mittig zwischen der radial inneren Hauptströmungspfadberandung HB und der radial äußeren Hauptströmungspfadberandung HB ist die mittlere Meridionalstromlinie SLM gegeben. Ihr Verlauf entspricht der Verbindung der Mittelpunkte dem Hauptströmungspfad einbeschriebener Kreise, wie im Bild für den ersten markierten Punkt P1 auf der mittleren Meridionalstromlinie SLM und den zugehörigen Kreis K1 beispielhaft verdeutlicht wird. VK und HK bezeichnen die Vorderkante und die Hinterkante einer im Hauptströmungspfad angeordneten Schaufel.

Eine Schar von Geraden G(k) ist innerhalb des Hauptströmungspfades gegeben, deren Mitglieder jeweils senkrecht auf der mittleren Meridionalstromlinie SLM stehen und an den Hauptströmungspfadberandungen HB enden. Weitere Meridionalstromlinien SL(j) sind durch die Verbindung von Punkten bei jeweils gleicher prozentualer Unterteilung der Geraden G(k) zwischen den Hauptströmungspfadberandungen HB definiert. Die Rotation einer Meridionalstromlinie um die Maschinenachse ergibt eine Meridionalstromfläche SF(j). Der Schnitt einer Meridionalstromfläche mit einer Schaufel der Strömungsmaschine ergibt einen Meridionalstromlinienschnitt SLS(j).

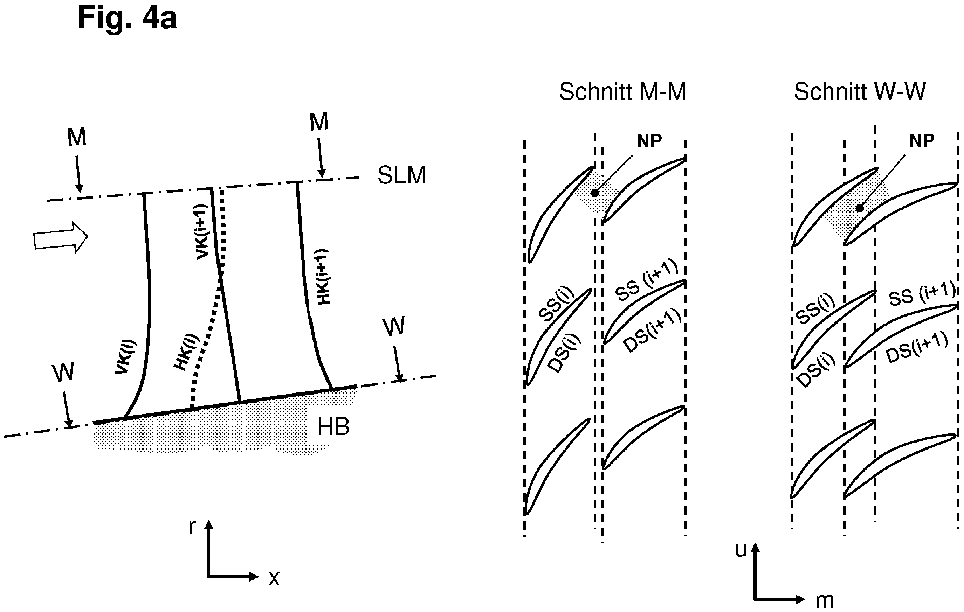

Die Fig. 4a zeigt auf ihrer linken Seite eine Anordnung von zwei zu einer erfindungsgemäßen Schaufelreihengruppe gehörenden und benachbarten Mitgliedsschaufelreihen (i) und (i+1) in der durch die Axialrichtung x und die Radialrichtung r gebildeten Meridionalebene. Die betreffende Schaufelreihengruppe kann folglich insgesamt mehr als die jeweils dargestellten zwei Mitgliedsschaufelreihen umfassen.

Dargestellt ist die erfindungsgemäße Anordnung im Bereich zwischen der Hauptströmungspfadmitte (mittlere Stromlinie SLM, entlang der dortigen Meridionalrichtung m), und einer Hauptströmungspfadberandung HB. Die Hauptströmungspfadberandung HB stellt eine Kontur an der Nabe oder am Gehäuse der Strömungsmaschine dar, zum Beispiel an einem Drehteller, einer Wandung, einem Statorfuß, einem Statordeckband, einem Rotorfuß oder einem Rotordeckband.

Die Hauptströmungspfadberandung HB ist entweder fest mit dem Ende mindestens einer Mitgliedsschaufelreihe verbunden (wie in der Fig. 4a dargestellt), oder es ist ein Spalt zwischen der Hauptströmungspfadberandung und mindestens dem Ende einer Mitgliedsschaufelreihe vorgesehen.

Die Anordnung zeigt die zwei Mitgliedsschaufelreihen (i) und (i+1), jeweils mit einer Vorderkante VK und einer Hinterkante HK. Die Erfindung betrachtet den Verlauf der Vorderkante VK(i+1) und den Verlauf der Hinterkante HK(i) sowie den Verlauf der Vorderkante VK(i+1) relativ zum Verlauf der Hinterkante HK(i) in strömungsmechanisch relevanten Ebenen.

Hier ist eine Anordnung dargestellt, die in meridionaler Richtung in einem an die Hauptströmungspfadmitte (SLM) angrenzenden Bereich eine Lücke zwischen den Mitgliedschaufelreihen (i) und (i+1) besitzt und in einem an die Hauptströmungspfadberandung angrenzenden Bereich eine Überlappung der Mitgliedschaufelreihen (i) und (i+1) vorsieht. Es ist also vorgesehen, dass in wenigstens einem Bereich der Hauptströmungspfadhöhe von der Vorderkante VK(i+1) der hinteren Mitgliedsschaufelreihe zur Hinterkante HK(i) der vorderen Mitgliedsschaufelreihe ein meridionaler Eingriff vorgesehen ist, dessen Betrag in Richtung mindestens einer der Hauptströmungspfadberandungen HB in wenigstens einem Teilabschnitt zunimmt. Ein solcher meridionaler Eingriff kann bei sämtlichen Ausführungsbeispielen der Erfindung vorgesehen sein.

Wie die Schnittdarstellungen entlang der Linien M-M und W-W auf der rechten Seite der Fig.4a zeigen, ist dabei in beiden Bereichen die Vorderkante mindestens einer Schaufel der Mitgliedsschaufelreihe (i+1) derart in der Umgebung einer Schaufel der Mitgliedsschaufelreihe (i) vorgesehen, dass zwischen der Druckseite der Schaufel (i) und der Saugseite der Schaufel (i+1) eine Nebenpassage (dargestellt als schattierte Fläche und gekennzeichnet mit NP) ausgebildet ist, wodurch lokal eine zusätzliche Strömungsführung und eine erhöhte Ausnutzung der Potentialeffekte im aerodynamisch wichtigen Interferenzbereich der beiden Mitgliedschaufelreihen erreicht wird.

Die rechte Seite der Fig. 4a zeigt die Anordnung der betrachteten zwei Mitgliedsschaufelreihen in der von der Meridionalkoordinate m und der Umfangsrichtung u gebildeten Meridionalstromfläche. Eine entsprechende Umfangsabwicklung entlang der Meridionalstromfläche ist für den Meridionalstromlinienschaufelschnitt M-M in Hauptströmungspfadmitte und für den Meridionalstromlinienschaufelschnitt W-W an der Hauptströmungspfadberandung dargestellt. Der Einfachheit halber (aber erfindungsgemäß nicht zwingend nötig) besitzen hier die beiden Mitgliedschaufelreihen gleiche Schaufelanzahlen. Vorteilhaft ist ebenfalls ein Schaufelanzahlverhältnis der Reihen (i) und (i+1) von 1:2, wobei jede zweite Schaufel der Reihe (i+1) nahe der Druckseite einer Schaufel der Reihe (i) angeordnet ist. Die Saugseiten der Schaufeln (i) und (i+1) sind jeweils mit SS(i) und SS(i+1) und die Druckseiten mit DS(i) und DS(i+1) gekennzeichnet.

Nicht nur in der hier dargestellten Figur, sondern gültig für alle erfindungsgemäßen Lösungen, kann es vorteilhaft sein, wenn in Umfangsrichtung u betrachtet eine Schaufel der Reihe (i+1) näher an der Druckseite DS(i) einer Schaufel der Reihe (i) vorgesehen ist. Dabei kann es, wie hier dargestellt, vorteilhaft sein, wenn der in Umfangsrichtung u gemessene Abstand zwischen der Saugseite einer Schaufel der Reihe (i+1) und der Druckseite einer Schaufel der Reihe (i) an der Hauptströmungspfadberandung HB größer ist als im Bereich der mittleren Stromlinie, wenn dieser Abstand zur Hauptströmungspfadberandung HB somit zunimmt.

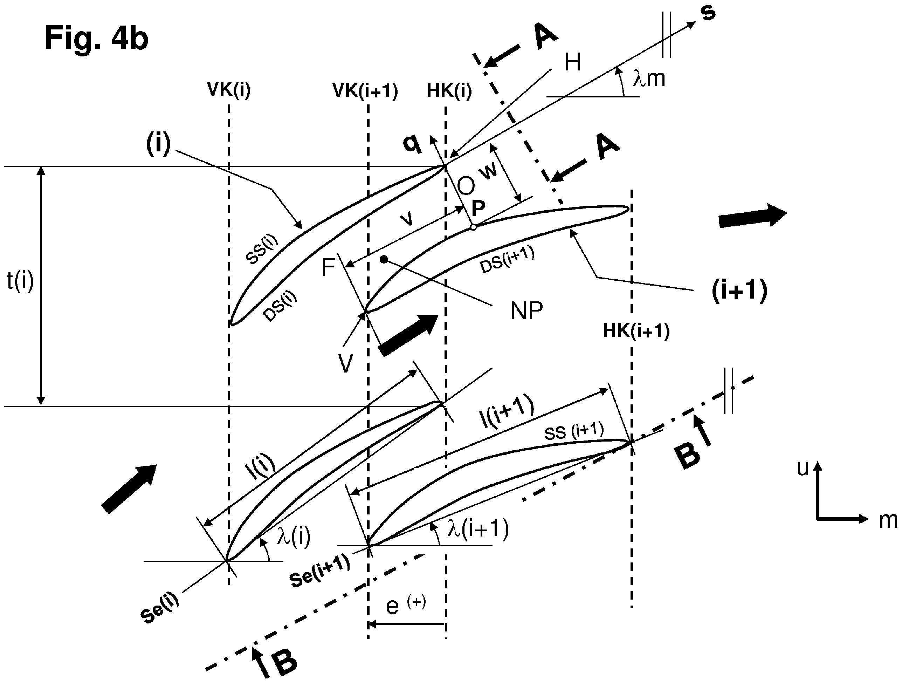

Die Fig. 4b zeigt einen Meridionalstromlinienschaufelschnitt sowie die Definition verschiedener relevanter Größen und Ansichten in der durch die Meridionalrichtung m und die Umfangskoordinate u gegebenen Ebene, d. h. in einem Meridionalstromlinienschaufelschnitt. Zur Vereinfachung sind nur jeweils 2 Schaufeln und die jeweils dazwischen liegende Schaufelhauptpassage der Mitgliedsschaufelreihen (i) und (i+1) dargestellt. Die Hauptströmungsrichtung ist durch dicke schwarze Pfeile gekennzeichnet. Die Verbindungslinien der Schaufelkanten sind entsprechend mit VK(i), HK(i), VK(i+1) und HK(i+1) gekennzeichnet. Jedes Schaufelprofil ist mit seiner Saugseite SS, seiner Druckseite DS dargestellt. Es wird darauf hingewiesen, dass zu Zwecken einer übersichtlichen Darstellung in der Fig. 4b und auch den anderen Figuren zwischen der Bezeichnung der Mitgliedsschaufelreihen (i) und (i+1) und der Bezeichnung der einzelnen Schaufeln der Mitgliedsschaufelreihen nicht unterschieden wird, d.h. die Schaufeln sind ebenfalls mit (i) und (i+1) bezeichnet.

Die Sehne der vorderen Schaufel Se(i) ist definiert als die druckseitig an das Profil der Schaufel (i) angelegte Tangente. Die Sehne der hinteren Schaufel Se(i+1) ist definiert als die druckseitig an das Profil der Schaufel (i+1) angelegte Tangente. Die Profiltiefe l(i) der vorderen Schaufel und die Profiltiefe l(i+1) der hinteren Schaufel sind in Richtung der jeweiligen Sehne gegeben.

Der Staffelungswinkel der vorderen Schaufel lambda(i) ($\lambda$(i)) ist definiert als der Neigungswinkel der Sehne der vorderen Schaufel S(i) gegen die Meridionalrichtung m. Der Staffelungswinkel der hinteren Schaufel lambda(i+1) (A(i+1)) ist definiert als der Neigungswinkel der Sehne der hinteren Schaufel S(i+1) gegen die Meridionalrichtung m. Der mittlere Staffelungswinkel lambdam (Am) ist definiert als Mittelwert der Staffelungswinkel lambda(i) und lambda(i+1) gemäß: lambdam = (lambda(i)+lambda(i+1)) / 2. Die Koordinatenrichtung s ist mit lambdam gegen die Meridionalrichtung m geneigt und zeigt stromabwärts.

Die Frontschaufelteilung t(i) ist definiert als der Abstand zweier benachbarter Schaufeln der vorderen Schaufelreihe (i) in deren Hinterkantenebene in Umfangsrichtung u.

Zwischen der Saugseite einer Schaufel der Reihe (i+1) und der Druckseite einer Schaufel der Reihe (i) ist ein kleinerer Strömungskanal ausgebildet, der hier als Nebenpassage NP bezeichnet wird.

Die Nebenpassagenlänge v ist definiert als der Abstand zwischen dem Hinterkantenpunkt H der Schaufel (i) und dem Vorderkantenpunkt V der Schaufel (i+1) in Richtung der Koordinate s. Die Nebenpassagenlänge v ist also gleich dem Abstand zwischen den Orthogonalen O und F, wobei O senkrecht auf der Koordinatenrichtung s steht und durch den Hinterkantenpunkt H der Schaufel (i) verläuft, und wobei F parallel zu O und durch den Vorderkantenpunkt V der Schaufel (i+1) verläuft.

Der Wert von v auf der mittleren Meridionalstromlinie SLM wird im Weiteren mit vSLM bezeichnet.

Von strömungsmechanischer Relevanz ist die Relation zur Profiltiefe der beiden Schaufeln (i) und (i+1), insbesondere zur Profiltiefe der vorderen Schaufel (i), weil deren Profildruckverteilung durch die Potentialwirkung der Vorderkante der Schaufel (i+1) am stärksten verändert wird. Aus diesem Grund ist die normierte Nebenpassagenlänge zu betrachten, gemäß: vn = v / l(i).

Der Wert von vn auf der mittleren Meridionalstromlinie SLM wird im Weiteren mit vnSLM bezeichnet. Die relative Nebenpassagenlänge v' ist definiert als v' = (v - vSLM) / l(i).

Die Nebenpassagenweite w ist definiert als der Abstand zwischen dem Hinterkantenpunkt H der Schaufel (i) und einem Punkt P auf der Saugseite der Schaufel (i+1), wobei sich der Punkt P als Schnittpunkt der im Hinterkantenpunkt H der Schaufel (i) auf der Koordinatenrichtung s errichteten Orthogonalen O mit der Saugseite der Schaufel (i+1) ergibt, wobei die besagte Orthogonale O entgegen der Koordinatenrichtung q weggehend von der Druckseite der Schaufel (i) orientiert ist. Der Wert von w auf der mittleren Meridionalstromlinie SLM wird im Weiteren mit wSLM bezeichnet. Die Verbindung aller entlang der Schaufelhöhe bei verschiedenen Meridionalstromlinienschaufelschnitten ermittelten Punkte P ergibt die saugseitige Projektionslinie PLSS(i+1) der hinteren Schaufel (i+1).

Von strömungsmechanischer Relevanz ist die Relation zum Abstand benachbarter Schaufeln insbesondere der Reihe (i), weil deren Profildruckverteilung durch die Potentialwirkung der Vorderkante der Schaufel (i+1) am stärksten verändert wird. Aus diesem Grund ist die normierte Nebenpassagenweite zu betrachten, gemäß: wn = w / (t(i) cos lambdam).

Der Wert von wn auf der mittleren Meridionalstromlinie SLM wird im Weiteren mit wnSLM bezeichnet. Die relative Nebenpassagenweite w' ist definiert als w' = (w - wSLM) / (t(i) cos lambdam).

Die Stärke der strömungsmechanischen Interferenz zwischen den Schaufeln (i) und (i+1) wird maßgeblich durch das Längen- Weiten-Verhältnis der Nebenpassage bestimmt. Das Längen-Weiten-Verhältnis LWV ist daher ein weitere Maß für die Festlegung günstiger Parameter der Schaufelreihengruppe. Es ist definiert als LWV = v/w. Somit ergibt sich eine hohe Interferenzstärke bei großen Werten von LWV. Der Wert von LWV auf der mittleren Meridionalstromlinie SLM wird im Weiteren mit LWVSLM bezeichnet.

Das relative Längen- Weiten-Verhältnis LWV ' ist definiert als Differenz zum Wert in der mittleren Meridionalstromlinie SLM, gemäß LWV' = LWV - LWVSLM.

Der meridionale Eingriff e wird parallel zur Richtung der Meridionalkoordinate m von der Vorderkante einer Schaufel (i+1) zu der Hinterkante einer Schaufel (i) gemessen und hat gegen die Meridionalströmungsrichtung positives Vorzeichen.

Für die Definition der Ansichten A-A und B-B wird nun davon ausgegangen, dass der in Fig.4b dargestellte Meridionalstromlinienschaufelschnitt sich an der mittleren Meridionalstromlinie SLM befindet. Die durch die Koordinatenrichtung s gekennzeichnete mittlere Sehnenrichtung ist repräsentativ für die örtliche Hauptströmungsrichtung im strömungsmechanischen Interferenzbereich der Schaufeln (i) und (i+1). Daher ist ein fester Bezug zu dieser ausgewiesenen und bedeutsamen mittleren Sehnenrichtung essentiell für eine strömungsmechanisch treffende Festlegung von Ausprägungsmerkmalen einer Schaufelreihengruppe. Die Größen Nebenpassagelänge und Nebenpassageweite sind aus diesem Grunde im Koordinatensystem der mittleren Sehnenrichtung und ihrer Orthogonalen definiert. Zusätzlich können in den Ansichten A-A und B-B die Schaufelkanten hinsichtlich ihrer strömungsmechanischen Wirkung beurteilt und beschrieben werden.

Die Ansicht A-A erfolgt stromaufwärts und parallel zur zu der durch die Koordinatenrichtung s gekennzeichneten mittleren Sehnenrichtung der Schaufelanordnung im mittleren Meridionalstromlinienschnitt.

Die Ansicht B-B erfolgt tangential zur Mittelschnittsmeridionalstromfläche (Kegelfläche um die Maschinenachse) und senkrecht zu der durch die Koordinatenrichtung s gekennzeichneten mittleren Sehnenrichtung der Schaufelanordnung im mittleren Meridionalstromlinienschaufelschnitt.

Im Weiteren werden erfindungsgemäße Festlegungen zur Nebenpassagenlänge gemacht.

Im mittleren Meridionalstromlinienschnitt SLM ist das Strömungsverhalten der Schaufelreihengruppe frei von Einflüssen der Hauptströmungspfadberandungen HB, sodass dort eine Nebenpassagenlänge unter primär zweidimensionalen Gesichtspunkten festzulegen ist. Die Profildruckverteilung sowohl der Schaufel (i) als auch der Schaufel (i+1) ist für eine möglichst hohe Ausbeute an Auftrieb auszulegen, was bei einer vergleichsweise kleinen normierten Nebenpassagenlänge vnSLM zu erreichen ist:

0 <= vnSLM <= 0.3.

Günstig wirkt sich eine Festlegung von 0 <= vnSLM <= 0.15 aus. Besonders günstig wirkt sich eine Festlegung von 0.02 <= vnSLM <= 0.1 aus. Unter baulichen Einschränkungen der Schaufelreihengruppe bleibt es günstig, wenn gilt 0.1 <= vnSLM <= 0.3 aus oder unter starken Einschränkungen 0.15 <= vnSLM <= 0.3.

Selbige Festlegungen von vn können erfindungsgemäß für Meridionalstromlinienschnitte in der Nähe Hauptströmungspfadmitte bei Hauptströmungspfadeindringungen von größergleich 30% gelten.

Ausgehend von einem Wert vnSLM in der Mitte des Hauptströmungspfades werden im Weiteren Festlegungen für die Nebenpassagenlänge in Richtung der Hauptströmungspfadberandung HB gemacht. Dies geschieht mit Hilfe der relativen Nebenpassagenlänge v' (Differenz der normierten Nebenpassagenlänge relativ zum Wert in Hauptströmungspfadmitte).

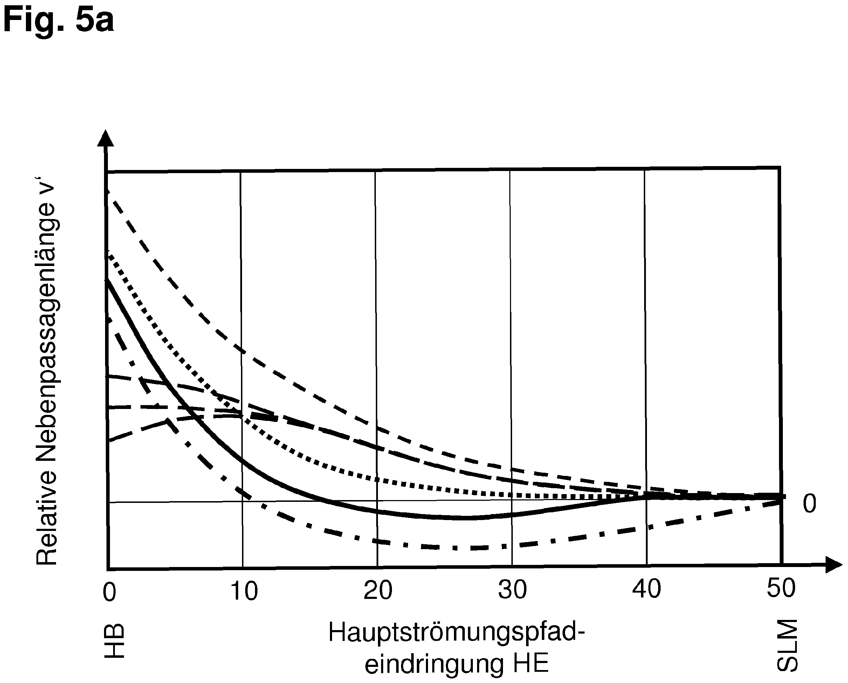

Die Fig. 5a zeigt einige erfindungsgemäß mögliche Formen des Verlaufes der relativen Nebenpassagenlänge v', aufgetragen über der Hauptströmungspfadeindringung HE. Letztere wird in Prozent der gesamten Hauptströmungspfadhöhe gemessen und hat entsprechend an der Hauptströmungspfadberandung HB den Wert null und an der mittleren Meridionalstromlinie SLM den Wert 50.

Es kann vorgesehen sein, dass der Wert von v' an der Hauptströmungspfadberandung HB größer ist als auf der mittleren Stromlinie SLM, wobei der Wert von v' in einem Teil des Bereiches zwischen der Hauptströmungspfadberandung HB und der mittleren Meridionalstromlinie SLM zur Hauptströmungspfadberandung hin ansteigt.

Dabei kann zusätzlich vorgesehen sein, dass der Wert von v' in einem Bereich angrenzend an die Hauptströmungspfadberandung HB zur Hauptströmungspfadberandung hin durchgehend ansteigt, wobei es weitere Vorteile erbringt, wenn der Wert von v' progressiv ansteigt; unter besonderen Einschränkungen kann auch ein degressiver Anstieg von v' erfindungsgemäß realisiert werden.

Alternativ kann zusätzlich vorgesehen sein, dass der Wert von v' in einem Bereich angrenzend an die Hauptströmungspfadberandung HB zur Hauptströmungspfadberandung hin im Wesentlichen oder exakt konstant verläuft.

Alternativ kann zusätzlich vorgesehen sein, dass der Wert von v' in einem Bereich angrenzend an die Hauptströmungspfadberandung HB zur Hauptströmungspfadberandung hin abfallend verläuft.

Vorteilhaft bei den drei voranstehend beschriebenen Gestaltungsalternativen des Verlaufs von v' ist es, wenn der besagte "Bereich angrenzend an die Hauptströmungspfadberandung HB" eine Hauptströmungspfadeindringung von HE >= 10% und in besonderen Fällen von 20% <= HE <= 30% besitzt.

Es kann weiterhin günstig sein, wenn der Verlauf von v' im Bereich zwischen der Hauptströmungspfadberandung HB und der mittleren Stromlinie SLM ein Minimum aufweist.

Es kann weiterhin günstig sein, dass der Wert von v' in einem Bereich angrenzend an die mittlere Meridionalstromlinie SLM zur Hauptströmungspfadberandung hin durchgehend im Wesentlichen oder exakt gleich bleibend verläuft, wobei es weitere Vorteile erbringt, wenn sich der besagte "Bereich angrenzend an die mittlere Meridionalstromlinie SLM" bis zu einer Hauptströmungspfadeindringung HE von kleinergleich 35% erstreckt..

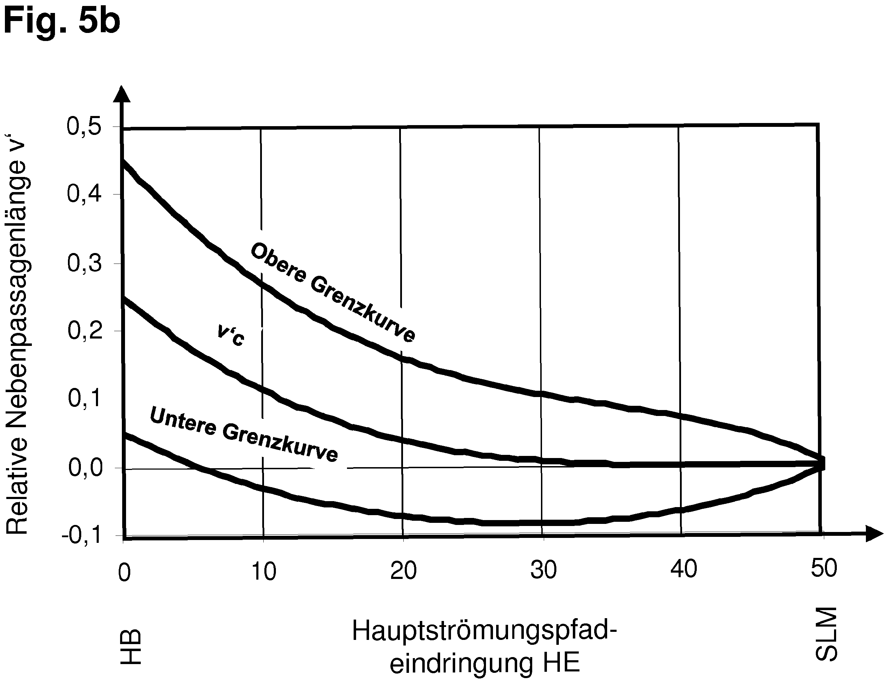

Die Fig. 5b zeigt weitere erfindungsgemäße Festlegungen für den Verlauf der relativen Nebenpassagenlänge v', aufgetragen über der Hauptströmungspfadeindringung HE.

Es kann vorgesehen sein, dass für die relative Nebenpassagenlänge v' an der Hauptströmungspfadberandung HB gilt:

0,05 <= v' <= 0,45 (<= bedeutet kleinergleich).

Es kann weiterhin vorgesehen sein, dass die Verteilung der relativen Nebenpassagenlänge v' über der Hauptströmungspfadeindringung HE gänzlich unterhalb einer oberen Grenzkurve v'o und gänzlich oberhalb einer unteren Grenzkurve v'u verläuft, wobei die obere Grenzkurve gegeben ist durch:

$$v'o = -6 \cdot 10^{-8}(HE)^4 + 4 \cdot 10^{-7}(HE)^3 + 0{,}0004 \cdot (HE)^2 - 0{,}0224(HE) + 0{,}45$$

und die untere Grenzkurve gegeben ist durch:

$$v'u = 5 \cdot 10^{-8}(HE)^4 - 5 \cdot 10^{-6}(HE)^3 + 0{,}0003 \cdot (HE)^2 - 0{,}0111(HE) + 0{,}5.$$

Es kann weiterhin günstig sein, wenn die Verteilung der relativen Nebenpassagenlänge v' innerhalb eines Bandes um eine Zentralverteilung v'c definiert ist, gemäß:

$$v'c - 0{,}1 \;<\; v' \;<\; v'c + 0{,}1,$$

wobei gilt:

$$v'c = 3 \cdot 10^{-9}(HE)^4 - 3 \cdot 10^{-6}(HE)^3 + 0{,}0004 \cdot (HE)^2 - 0{,}0176(HE) + 0{,}25$$

Es kann weiterhin günstig sein, wenn die Verteilung der relativen Nebenpassagenlänge v' innerhalb eines engen Bandes um eine Zentralverteilung v'c definiert ist, gemäß:

$$v'c - 0{,}05 \;<\; v' \;<\; v'c + 0{,}05,$$

wobei gilt:

$$v'c = 3 \cdot 10^{-9}(HE)^4 - 3 \cdot 10^{-6}(HE)^3 + 0{,}0004 \cdot (HE)^2 - 0{,}0176(HE) + 0{,}25$$

Im Weiteren werden erfindungsgemäße Festlegungen zur Nebenpassagenweite gemacht.

Im mittleren Meridionalstromlinienschnitt SLM ist das Strömungsverhalten der Schaufelreihengruppe frei von Einflüssen der Hauptströmungspfadberandungen HB, sodass dort eine Nebenpassagenweite unter primär zweidimensionalen Gesichtpunkten festzulegen ist. Die Profildruckverteilung sowohl der Schaufel (i) als auch der Schaufel (i+1) ist für eine möglichst hohe Ausbeute an Auftrieb auszulegen, was bei einer vergleichsweise kleinen normierten Nebenpassagenweite wnSLM zu erreichen ist:
0,02 <= wnSLM <= 0.3.

Günstig wirkt sich eine Festlegung von 0,05 <= wnSLM <= 0.2 aus. Besonders günstig wirkt sich eine Festlegung von 0.05 <= wnSLM <= 0.15 aus. Unter baulichen Einschränkungen der Schaufelreihengruppe bleibt es günstig, wenn gilt 0.15 <= wnSLM <= 0.3 aus oder unter starken Einschränkungen 0.2 <= vnSLM <= 0.3.

Selbige Festlegungen von wn können erfindungsgemäß für Meridionalstromlinienschnitte in der Nähe Hauptströmungspfadmitte bei Hauptströmungspfadeindringungen von größergleich 30% gelten.

Ausgehend von einem Wert wnSLM in der Mitte des Hauptströmungspfades werden im Weiteren Festlegungen für die Nebenpassagenweite in Richtung der Hauptströmungspfadberandung HB gemacht. Dies geschieht mit Hilfe der relativen Nebenpassagenweite w' (Differenz der normierten Nebenpassagenweite relativ zum Wert in Hauptströmungspfadmitte).

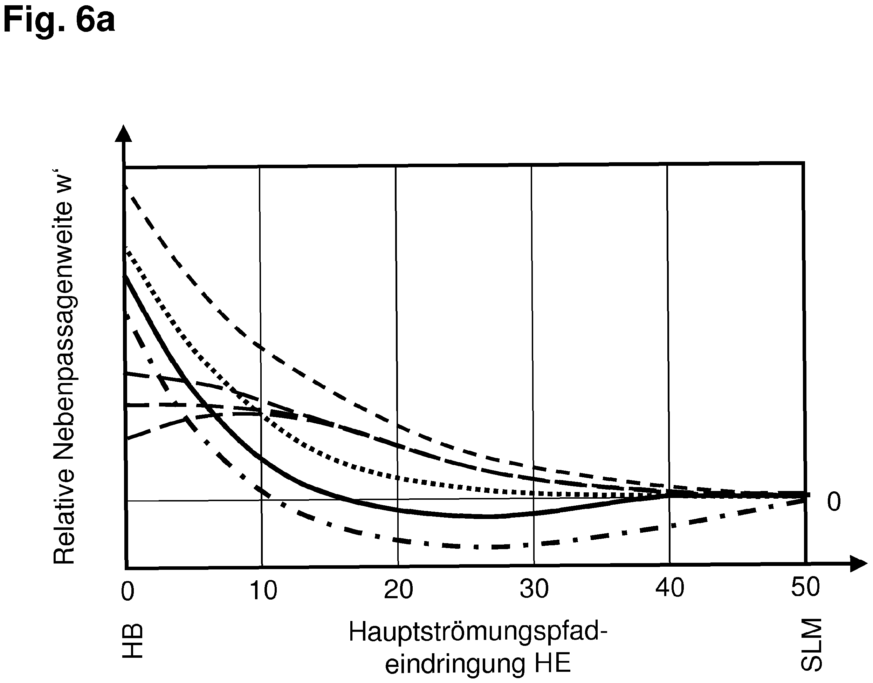

Die Fig. 6a zeigt einige erfindungsgemäß mögliche Formen des Verlaufes der relativen Nebenpassagenweite w', aufgetragen über der Hauptströmungspfadeindringung HE.

Es kann vorgesehen sein, dass der Wert von w' an der Hauptströmungspfadberandung HB größer ist als auf der mittleren Stromlinie SLM, wobei der Wert von w' in einem Teil des Bereiches zwischen der Hauptströmungspfadberandung HB und der mittleren Meridionalstromlinie SLM zur Hauptströmungspfadberandung hin ansteigt.

Dabei kann zusätzlich vorgesehen sein, dass der Wert von w' in einem Bereich angrenzend an die Hauptströmungspfadberandung HB zur Hauptströmungspfadberandung hin durchgehend ansteigt, wobei es weitere Vorteile erbringt, wenn der Wert von w' progressiv ansteigt; unter besonderen Einschränkungen kann auch ein degressiver Anstieg von w' erfindungsgemäß realisiert werden.

Alternativ kann zusätzlich vorgesehen sein, dass der Wert von w' in einem Bereich angrenzend an die Hauptströmungspfadberandung HB zur Hauptströmungspfadberandung hin im Wesentlichen oder exakt konstant verläuft.

Alternativ kann zusätzlich vorgesehen sein, dass der Wert von w' in einem Bereich angrenzend an die Hauptströmungspfadberandung HB zur Hauptströmungspfadberandung hin abfallend verläuft.

Vorteilhaft bei den drei voranstehend beschriebenen Gestaltungsalternativen des Verlaufs von w' ist es, wenn der besagte "Bereich angrenzend an die Hauptströmungspfadberandung HB" eine Hauptströmungspfadeindringung von HE >= 10% und in besonderen Fällen von 20% <= HE <= 30% besitzt.

Es kann weiterhin günstig sein, wenn der Verlauf von w' im Bereich zwischen der Hauptströmungspfadberandung HB und der mittleren Stromlinie SLM ein Minimum aufweist.

Es kann weiterhin günstig sein, wenn der Wert von w' in einem Bereich angrenzend an die mittlere Meridionalstromlinie SLM zur Hauptströmungspfadberandung hin durchgehend im Wesentlichen oder exakt gleich bleibend verläuft, wobei es weitere Vorteile erbringt, wenn sich der besagte "Bereich angrenzend an die mittlere Meridionalstromlinie SLM" bis zu einer Hauptströmungspfadeindringung HE von kleinergleich 35% erstreckt.

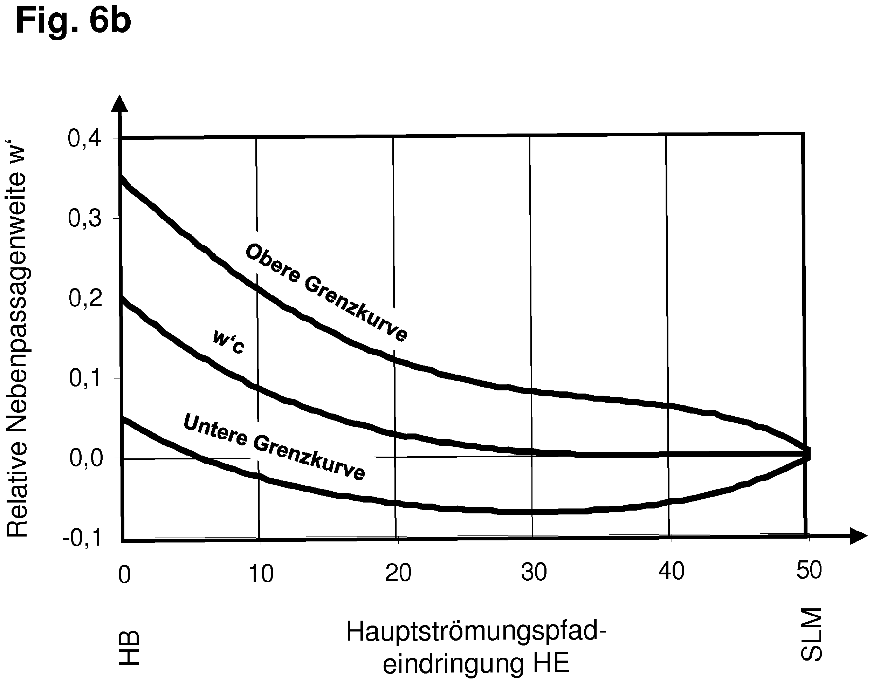

Die Fig. 6b zeigt weitere erfindungsgemäße Festlegungen für den Verlauf der normierten Nebenpassagenweite w', aufgetragen über der Hauptströmungspfadeindringung HE.

Es kann vorteilhaft sein, wenn für die relative Nebenpassagenweite w' an der Hauptströmungspfadberandung HB gilt:

0,05 <= w' <= 0,35 (<= bedeutet kleinergleich).

Es kann weiterhin günstig sein, wenn die Verteilung der relativen Nebenpassagenweite w' über der Hauptströmungspfadeindringung HE gänzlich unterhalb einer oberen Grenzkurve w'o und gänzlich oberhalb einer unteren Grenzkurve w'u verläuft, wobei die obere Grenzkurve gegeben ist durch:

$$w'o = -1 \cdot 10^{-7}(HE)^4 + 7 \cdot 10^{-6}(HE)^3 + 0,0001 \cdot (HE)^2 - 0,0159(HE) + 0,35$$

und die untere Grenzkurve gegeben ist durch:

$$w'u = 8 \cdot 10^{-8}(HE)^4 - 8 \cdot 10^{-6}(HE)^3 + 0,0004 \cdot (HE)^2 - 0,0108(HE) + 0,05$$

Es kann weiterhin günstig sein, wenn die Verteilung der relativen Nebenpassagenweite w' innerhalb eines Bandes um eine Zentralverteilung w'c definiert ist, gemäß:

$$w'c - 0,08 < w' < w'c + 0,08,$$

wobei gilt:

$$w'c = 2 \cdot 10^{-8}(HE)^4 - 5 \cdot 10^{-6}(HE)^3 + 0,0004 \cdot (HE)^2 - 0,015(HE) + 0,2$$

Es kann weiterhin günstig sein, wenn die Verteilung der normierten Nebenpassagenweite w' innerhalb eines engen Bandes definiert ist, gemäß:

$$w'c - 0,04 < w' < w'c + 0,04,$$

wobei gilt:

$$w'c = 2 \cdot 10^{-8}(HE)^4 - 5 \cdot 10^{-6}(HE)^3 + 0,0004 \cdot (HE)^2 - 0,015(HE) + 0,2$$

Neben dem Interferenzparameter "Nebenpassagenlänge" ist auch der individuelle Verlauf der Hinterkantenlinie HK(i) der vorderen Schaufel (i) und der Vorderkantenlinie VK(i+1) der hinteren Schaufel (i+1) von zentraler Bedeutung für die günstige Beeinflussung der dreidimensionalen Strömung im Interferenzbereich der Schaufelreihen (i) und (i+1).

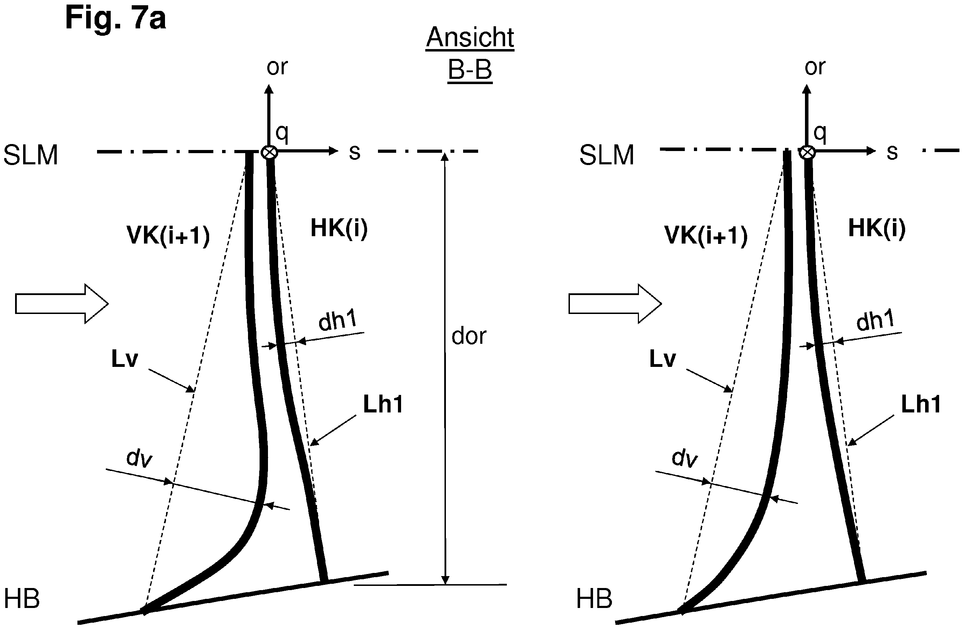

Die Fig. 7a zeigt als dicke durchgezogene Linien die Hinterkante HK(i) der vorderen Schaufel und die Vorderkante VK(i+1) der hinteren Schaufel im Bereich zwischen der Hauptströmungspfadberandung HB und der bei halber Schaufelhöhe definierten mittleren Meridionalstromlinie SLM, in der s-or-Ebene, wobei die Koordinatenrichtung or orthogonal zu der durch SLM verlaufenden Meridionalstromfläche gegeben ist (Ansicht B-B aus Fig. 4b). Die Hauptströmungsrichtung ist durch einen dicken Pfeil gekennzeichnet. Der Wölbungsgrad WGh1 der Hinterkantenlinie HK(i) ist als größter feststellbarer Abstand dh1 zwischen der Hinterkantelinie HK(i) selbst und der geraden Verbindungslinie Lh1 ihrer Punkte an SLM und HB bezogen auf die meridional-stromflächenorthogonale Distanz dor zwischen HB und SLM an der Hinterkantelinie HK(i) definiert, gemäß WGh1 = dh1 / dor. Der Wölbungsgrad WGv der Vorderkantenlinie VK(i+1) ist als größter feststellbarer Abstand dv zwischen der Vorderkantenlinie VK(i+1) selbst und der geraden Verbindungslinie Lv ihrer Punkte an SLM und HB bezogen auf die meridionalstromflächenorthogonale Distanz dor zwischen HB und SLM an der Hinterkantelinie HK(i) definiert definiert, gemäß WGv = dv / dor.

Wie auf der linken und rechten Seite der Fig. 7a dargestellt, kann es vorteilhaft sein, wenn im Verlauf zwischen der mittleren Meridionalstromlinie SLM und der Hauptströmungspfadberandung HB die Vorderkantenlinie VK(i+1) der hinteren Schaufel (i+1) insgesamt stärker gewölbt vorgesehen ist als die Hinterkantenlinie HK(i) der vorderen Schaufel (i), gekennzeichnet durch Wölbungsgrade gemäß WGv > WGh1. Dabei kann es weiterhin vorteilhaft sein, wenn gilt WGv >= 0,05 + WGh1. Dabei kann es auch vorteilhaft sein, wenn die Hinterkantenlinie insgesamt schwach gewölbt vorgesehen ist, gekennzeichnet durch einen Wölbungsgrad von WGh1 <= 0,05. In einem besonderen Fall kann HK(i) im Wesentlichen oder exakt linear verlaufen.

Es kann weiterhin vorteilhaft sein, wenn die gerade Verbindungslinie Lv der Punkte der Vorderkantenlinie VK(i+1) an SLM und HB stärker gegen die meridionalstromflächenorthogonale Richtung or geneigt ist als die gerade Verbindungslinie Lh1 der Punkte der Hinterkantenlinie HK(i) an SLM und HB.

Dabei kann es vorteilhaft sein, wenn Lv und Lh1 in entgegengesetzter Richtung gegen die meridionalstromflächenorthogonale Richtung or geneigt sind.

Es kann alternativ vorteilhaft sein, wenn Lv und Lh1 in entgegengesetzter Richtung und innerhalb einer Toleranz von +/-2 Grad mit gleichen Winkelbeträgen gegen die meridionalstromflächenorthogonale Richtung or geneigt sind.

Es kann weiterhin günstig sein, wenn beide Linien, Vorderkantenlinie VK(i+1) der Schaufel (i+1) und Hinterkantenlinie HK(i) der Schaufel (i), mit gleicher Anzahl an Krümmungswechseln vorgesehen sind.

Es kann weiterhin günstig sein, wenn beide Linien, Vorderkantenlinie VK(i+1) der Schaufel (i+1) und Hinterkantenlinie HK(i) der Schaufel (i), mit einem Verlauf ohne Krümmungswechsel vorgesehen sind. Weiter vorteilhaft ist dabei ein bogenartiger Verlauf mit Krümmungen ungleich null von durchgehend gleichem Vorzeichen, siehe Fig. 7a, rechts.

Es kann alternativ günstig sein, wenn beide Linien, Vorderkantenlinie VK(i+1) der Schaufel (i+1) und Hinterkantenlinie HK(i) der Schaufel (i), einen Verlauf mit einem Krümmungswechsel aufweisen. Weiter vorteilhaft ist dabei ein S-förmiger Verlauf mit 2 gebogenen Abschnitten mit Krümmungen entgegengesetzten Vorzeichens, siehe Fig. 7a, links.

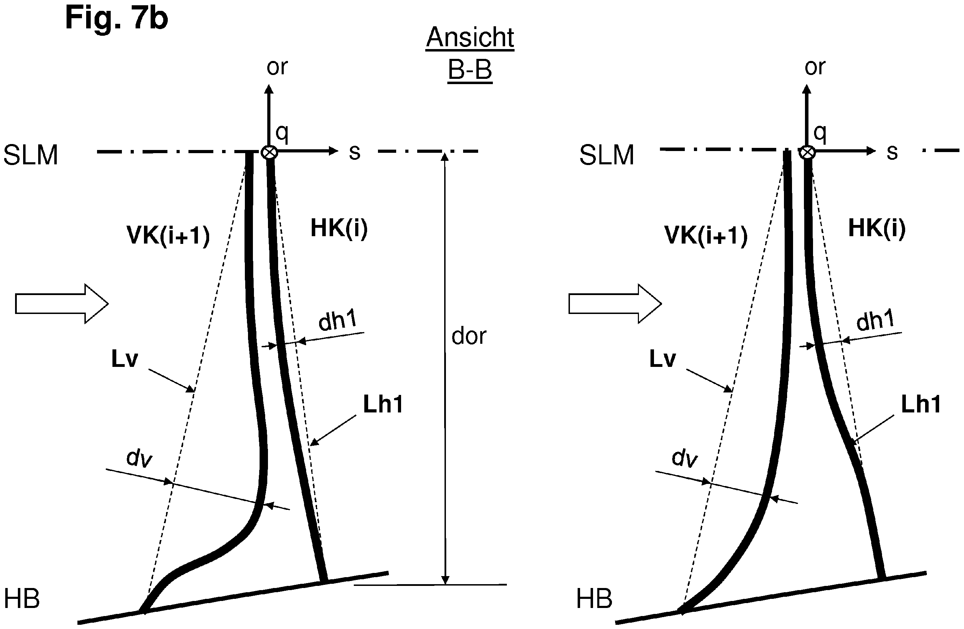

Es kann alternativ günstig sein, wenn eine der beiden Linien, Vorderkantenlinie VK(i+1) der Schaufel (i+1) und Hinterkantenlinie HK(i) der Schaufel (i), einen Verlauf ohne Krümmungswechsel aufweist während die andere der beiden Linien einen Verlauf mit mindestens einem Krümmungswechsel aufweist, siehe Fig. 7b, links und rechts.

Es kann weiterhin vorteilhaft sein, wenn die Vorderkantenlinie VK(i+1) der Schaufel (i+1) einen Verlauf mit zwei Krümmungswechseln aufweist, siehe Fig. 7b, links.

Es kann weiterhin vorteilhaft sein, wenn eine der beiden Linien, Vorderkantenlinie VK(i+1) der Schaufel (i+1) und Hinterkantenlinie HK(i) der Schaufel (i), einen Verlauf mit mindestens einem Krümmungswechsel aufweist, wobei der Punkt eines Krümmungswechsels näher an der Hauptstömungspfadberandung HB als an der mittleren Stromlinie SLM oder auch innerhalb eines Abstandes von (0,25*dor) nahe an der HB vorgesehen ist.

Es ist weiterhin günstig, wenn die Vorderkantenlinie VK(i+1) örtlich im Bereich eines Krümmungswechsels flach unter weniger als 30 Grad gegenüber der Hauptstömungspfadberandung HB verläuft uns auf diese Weise ein sattelähnlicher Linienabschnitt gebildet ist, der in der Nähe von HB die VK(i+1) lokal weit stromaufwärts reichen lässt.

Von weiterem Vorteil kann es sein, wenn die Linien VK(i+1) und HK(i) qualitativ gleichartig (z.B. beide S-förmig mit einem Krümmungswechsel) und gleichsinnig gekrümmt verlaufen, siehe Fig. 7a, links. Dabei kann es von besonderem Vorteil sein, wenn VK(i+1) und HK(i) innerhalb einer Toleranz von +/-3 Grad lokalen Neigungswinkels in einem Bereich an der SLM von mindestens (0,4*dor) parallel verlaufen.

Auch kann es von weiterem Vorteil sein, wenn die Linien VK(i+1) und HK(i) qualitativ gleichartig (z.B. beide bogenartig ohne Krümmungswechsel) aber gegensinnig gekrümmt verlaufen, siehe Fig. 7a, rechts. Dabei kann es von besonderem Vorteil sein, wenn VK(i+1) und HK(i) innerhalb einer Toleranz von +/-3 Grad lokalen Neigungswinkels spiegelbildlich identisch verlaufen.

Es kann weiterhin vorteilhaft sein, wenn wenigstens eine der Linien VK(i+1) und HK(i) in wenigstens einem überwiegenden Teil ihres Verlaufes zwischen der mittleren Stromlinie SLM und der Hauptströmungspfadberandung HB stromaufwärts konkav beschaffen ist.

Es kann auch vorteilhaft sein, wenn wenigstens eine der Linien VK(i+1) und HK(i) in wenigstens einem überwiegenden Teil ihres Verlaufes zwischen der mittleren Stromlinie SLM und der Hauptströmungspfadberandung HB stromaufwärts konvex beschaffen ist.

Es kann weiterhin vorteilhaft sein, wenn die Linien VK(i+1) und HK(i) an der mittleren Stromlinie SLM innerhalb einer Toleranz von +/-2 Grad gleiche örtliche Neigung gegenüber der meridionalstromflächenorthogonalen Richtung or aufweisen.

Es kann weiterhin vorteilhaft sein, wenn wenigstens eine der beiden Linien VK(i+1) und HK(i) in einem Bereich angrenzend an die Hauptströmungspfadberandung HB stromabwärts in Richtung der Hauptströmungspfadberandung HB geneigt ist.

Es kann weiterhin vorteilhaft sein, wenn wenigstens eine der beiden Linien VK(i+1) und HK(i) an der mittleren Stromlinie SLM eine örtliche Neigung gegenüber der meridionalstromflächenorthogonalen Richtung or von betragsmäßig kleiner 10 Grad aufweist.

Es kann weiterhin vorteilhaft sein, wenn wenigstens eine der beiden Linien VK(i+1) und HK(i) an der Hauptströmungspfadberandung HB eine örtliche Neigung gegenüber der meridionalstromflächenorthogonalen Richtung or von betragsmäßig größer 20 Grad aufweist.

Es kann weiterhin vorteilhaft sein, wenn die beiden Linien VK(i+1) und HK(i) an der Hauptströmungspfadberandung HB örtliche Neigungen gegenüber der meridionalstromflächenorthogonalen Richtung or aufweisen, die betragsmäßig innerhalb einer Toleranz von +/-3 Grad gleich aber unterschiedlichen Vorzeichens sind.

Es kann weiterhin vorteilhaft sein, wenn die Vorderkantenlinie VK(i+1) der Schaufel (i+1) in einem überwiegenden und an die Hauptströmungspfadberandung HB angrenzenden Bereich in Richtung der HB stetig zunehmend weiter stromaufwärts entsprechend stetig kleiner werdender Koordinaten s angeordnet ist, siehe Fig. 7a, links.

Es kann dabei günstig sein, wenn die Vorderkantenlinie VK(i+1) der Schaufel (i+1) gänzlich in Richtung der HB stetig zunehmend weiter stromaufwärts entsprechend stetig kleiner werdender Koordinaten s angeordnet ist, siehe Fig. 7a, rechts.

Es kann weiterhin vorteilhaft sein, wenn die Vorderkantenlinie VK(i+1) der Schaufel (i+1) in einem Bereich an der Hauptströmungspfadberandung HB in Richtung der HB einen Verlauf mit stetig zunehmender, stromaufwärts konkaver Krümmung aufweist, siehe Fig. 7b, rechts.

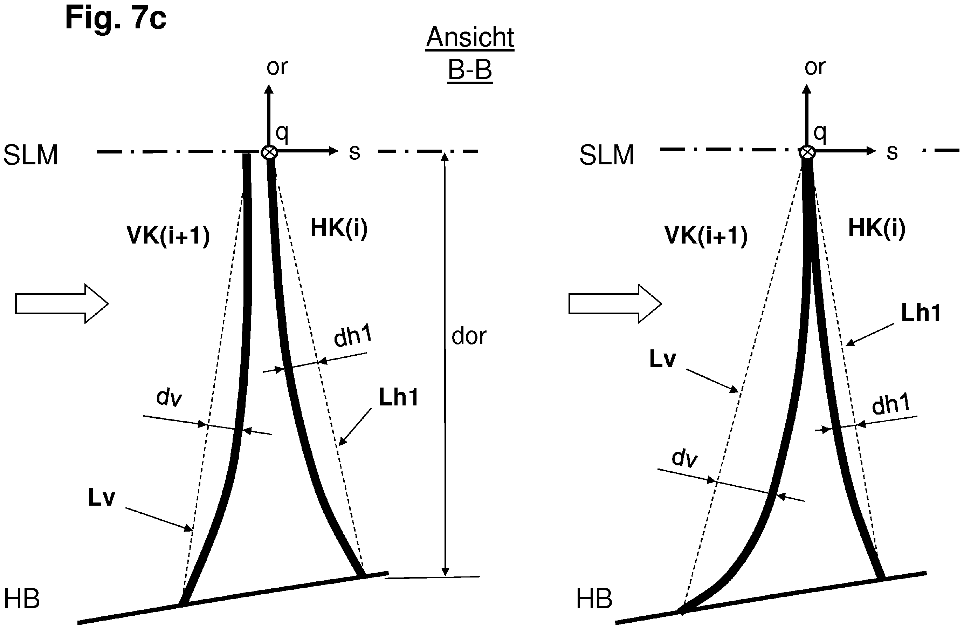

Es kann weiterhin vorteilhaft sein, wenn sich die Vorderkantenlinie VK(i+1) und die Hinterkantenlinie HK(i) in wenigstens einem Punkt tangieren bzw. zusammenfallen, siehe Fig. 7c, rechts.

Es kann weiterhin vorteilhaft sein, wenn sich die Vorderkantenlinie VK(i+1) und die Hinterkantenlinie HK(i) in wenigstens einem Punkt zwischen SLM und HB schneiden.

Neben dem Interferenzparameter "Nebenpassagenweite" ist auch der individuelle Verlauf der Hinterkantenlinie HK(i) und der saugseitigen Projektionslinie PLSS (i+1) von zentraler Bedeutung für die günstige Beeinflussung der dreidimensionalen Strömung im Interferenzbereich der Schaufelreihen (i) und (i+1).

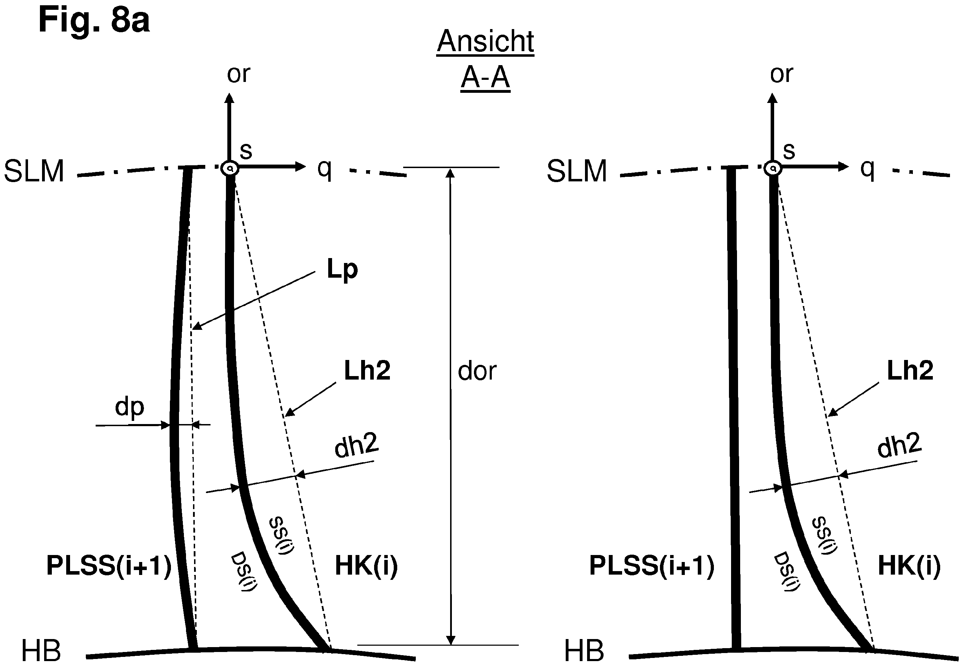

Die Fig. 8a zeigt als dicke durchgezogene Linien die Hinterkante der vorderen Schaufel HK(i) und die saugseitige Projektionslinie PLSS(i+1) der hinteren Schaufel (i+1) im Bereich zwischen der Hauptströmungspfadberandung HB und der bei halber Schaufelhöhe definierten mittleren Meridionalstromlinie SLM, in der q-or-Ebene (Ansicht A-A aus Fig. 4b). Die Saugseite SS(i) und die Druckseite DS(i) der vorderen Schaufel sind ebenfalls gekennzeichnet. Der Wölbungsgrad WGh2 der Hinterkante HK(i) ist als größter feststellbarer Abstand dh2 zwischen der Hinterkante HK(i) selbst und der geraden Verbindungslinie Lh2 ihrer Punkte an SLM und HB bezogen auf die meridionalstromflächenorthogonale Distanz dor an HK(i) zwischen HB und SLM definiert, gemäß WGh2 = dh2 / dor. Der Wölbungsgrad WGp der saugseitigen Projektionslinie PLSS(i+1) ist als größter feststellbarer Abstand dp zwischen der Projektionslinie PLSS(i+1) selbst und der geraden Verbindungslinie Lp ihrer Punkte an SLM und HB bezogen auf die meridionalstromflächenorthogonale Distanz dor zwischen HB und SLM definiert, gemäß WGp = dp / dor.

Wie auf der linken und rechten Seite der Fig. 8a dargestellt, kann es vorteilhaft sein, wenn im Verlauf zwischen der mittleren Meridionalstromlinie SLM und der Hauptströmungspfadberandung HB die Hinterkantenlinie HK(i) der vorderen Schaufel (i) insgesamt stärker gewölbt vorgesehen ist als die saugseitige Projektionslinie PLSS(i+1) der hinteren Schaufel (i+1), gekennzeichnet durch Wölbungsgrade gemäß WGh2 > WGp. Dabei kann es weiterhin vorteilhaft sein, wenn gilt WGh2 >= 0,05 + WGp. Dabei kann es auch vorteilhaft sein, wenn die saugseitige Projektionslinie PLSS(i+1) insgesamt schwach gewölbt vorgesehen ist, gekennzeichnet durch einen Wölbungsgrad von WGp <= 0,05. In einem besonderen Fall kann PLSS(i+1) im Wesentlichen oder exakt linear verlaufen (siehe Fig. 8a, rechts).

Es kann weiterhin vorteilhaft sein, wenn die gerade Verbindungslinie Lh2 der Punkte der Hinterkantenlinie HK(i) an SLM und HB stärker gegen die meridionalstromflächenorthogonale Richtung or geneigt ist als die gerade Verbindungslinie Lp der Punkte der saugseitigen Projektionslinie PLSS(i+1) an SLM und HB.

Dabei kann es vorteilhaft sein, wenn Lh2 und Lp in entgegengesetzter Richtung gegen die meridionalstromflächenorthogonale Richtung or geneigt sind.

Es kann alternativ vorteilhaft sein, wenn Lh2 und Lp in entgegengesetzter Richtung und innerhalb einer Toleranz von +/-2 Grad mit gleichen Winkelbeträgen gegen die meridionalstromflächenorthogonale Richtung or geneigt sind.

Es kann weiterhin günstig sein, wenn beide Linien, Hinterkantenlinie HK(i) der Schaufel (i) und saugseitige Projektionslinie PLSS(i+1) der Schaufel (i+1), mit einem Verlauf ohne Krümmungswechsel vorgesehen sind. Weiter vorteilhaft ist dabei ein bogenförmiger Verlauf mit Krümmungen von durchgehend gleichem Vorzeichen, siehe Fig. 8a, links.

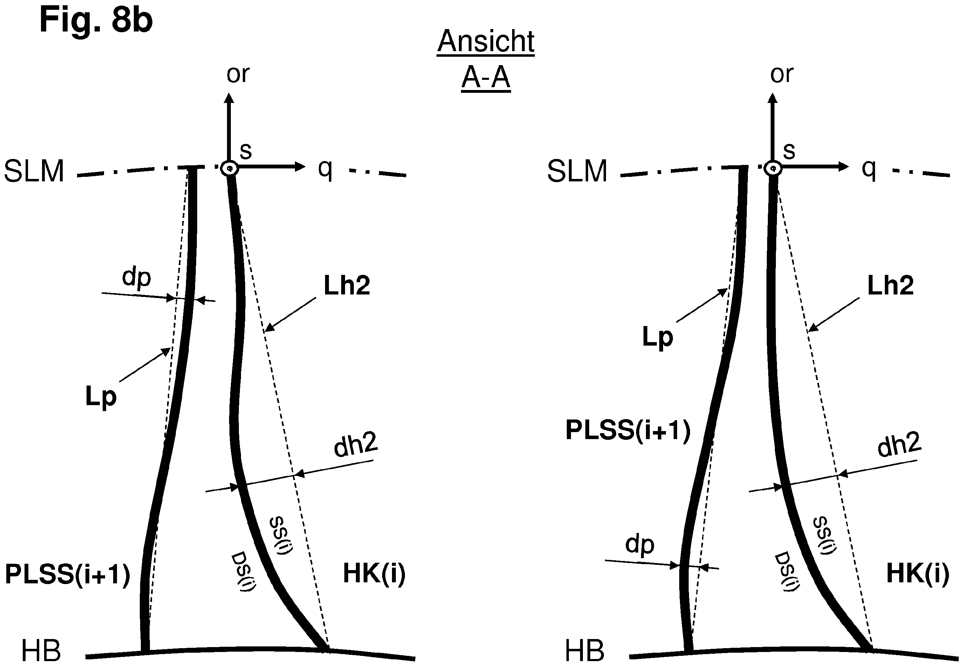

Es kann alternativ günstig sein, wenn beide Linien, Hinterkantenlinie HK(i) der Schaufel (i) und saugseitige Projektionslinie PLSS(i+1) der Schaufel (i+1), einen Verlauf mit einem Krümmungswechsel aufweisen. Weiter vorteilhaft ist dabei ein S-förmiger Verlauf mit 2 gebogenen Abschnitten mit Krümmungen entgegengesetzten Vorzeichens, siehe Fig. 8b, links.

Es kann alternativ günstig sein, wenn eine der beiden Linien, Hinterkantenlinie HK(i) der vorderen Schaufel (i) und saugseitige Projektionslinie PLSS(i+1) der hinteren Schaufel (i+1), mindestens einen Krümmungswechsel mehr aufweist als die andere der beiden Linien, wenn beispielweise eine der beiden Linien einen Verlauf ohne Krümmungswechsel aufweist während die andere einen Verlauf mit einem Krümmungswechsel besitzt, siehe Fig. 8b, rechts.

Von weiterem Vorteil kann es sein, wenn die Linien HK(i) und PLSS(i+1) qualitativ gleichartig und gleichsinnig gekrümmt verlaufen, siehe Fig. 8b, links.

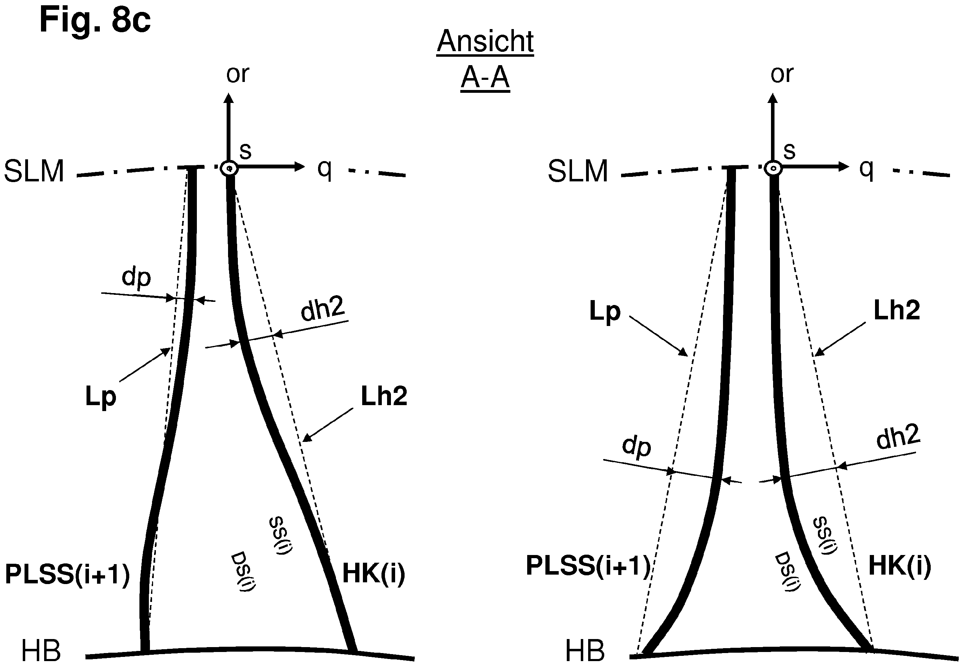

Auch kann es von weiterem Vorteil sein, wenn die Linien HK(i) und PLSS(i+1) qualitativ gleichartig aber gegensinnig gekrümmt verlaufen, siehe Fig. 8c, links. Dabei kann es von besonderem Vorteil sein, wenn HK(i) und PLSS(i+1) innerhalb einer Toleranz von +/-3 Grad lokalen Neigungswinkels spiegelbildlich identisch verlaufen, siehe Fig. 8c, rechts.

Es kann weiterhin vorteilhaft sein, wenn wenigstens eine der Linien HK(i) und PLSS(i+1) in wenigstens einem überwiegenden Teil ihres Verlaufes zwischen der mittleren Stromlinie SLM und der Hauptströmungspfadberandung HB saugseitig konkav beschaffen ist. Besonders vorteilhaft ist es, wenn die Hinterkantenlinie HK(i) in wenigstens einem überwiegenden Teil ihres Verlaufes saugseitig konkav beschaffen ist.

Es kann weiterhin vorteilhaft sein, wenn die Linien HK(i) und PLSS(i+1) an der mittleren Stromlinie SLM innerhalb einer Toleranz von +/-2 Grad gleiche örtliche Neigung gegenüber der meridionalstromflächenorthogonalen Richtung or aufweisen.

Es kann weiterhin vorteilhaft sein, wenn wenigstens eine der beiden Linien HK(i) und PLSS(i+1) an der mittleren Stromlinie SLM eine örtliche Neigung gegenüber der meridionalstromflächenorthogonalen Richtung or von betragsmäßig kleiner 10 Grad aufweist.

Es kann weiterhin vorteilhaft sein, wenn wenigstens eine der beiden Linien HK(i) und PLSS(i+1) in einem Bereich angrenzend an die Hauptströmungspfadberandung HB druckseitig in Richtung der Hauptströmungspfadberandung HB geneigt ist.

Es kann weiterhin vorteilhaft sein, wenn wenigstens eine der beiden Linien HK(i) und PLSS(i+1) an der Hauptströmungspfadberandung HB eine örtliche Neigung gegenüber der meridionalstromflächenorthogonalen Richtung or von betragsmäßig größer 20 Grad aufweist.

Es kann weiterhin vorteilhaft sein, wenn die beiden Linien HK(i) und PLSS(i+1) an der Hauptströmungspfadberandung HB örtliche Neigungen gegenüber der meridionalstromflächenorthogonalen Richtung or aufweisen, die betragsmäßig innerhalb einer Toleranz von +/-3 Grad gleich aber unterschiedlichen Vorzeichens sind.

Als Maß für die Stärke der strömungsmechanischen Interferenz zwischen der vorderen und hinteren Mitgliedschaufelreihe lässt sich das Längen-Weiten-Verhältnis LWV = v/w der Schaufelreihengruppe heranziehen.

Im mittleren Meridionalstromlinienschnitt SLM, wo das Strömungsverhalten der Schaufelreihengruppe frei von Einflüssen der Hauptströmungspfadberandungen HB ist, sind Werte von LWV <= 2 vorteilhaft.

Dabei kann es weiter vorteilhaft sein wenn der Wert von LWV innerhalb eines Bereiches festgelegt ist, gemäß: 0,5 <= LWVSLM <= 1,5. Es ist weiter vorteilhaft, wenn LWVSLM innerhalb einer Toleranz von +/-0,25 auf einen Wert von 0,75 festgelegt wird. Unter baulichen Einschränkungen kann es vorteilhaft sein, wenn LWVSLM innerhalb einer Toleranz von +/-0,25 auf einen Wert von 1,5 festgelegt wird.

Im Folgenden werden Festlegungen zur Verteilung in Richtung der Hauptströmunspfadberandungen gemacht. Dazu wird das relative Längen-Weiten-Verhältnis LWV' herangezogen.

Es kann vorteilhaft sein, wenn LWV' in einem überwiegenden Bereich angrenzend an die mittlere Meridionalstromlinie SLM innerhalb einer Toleranz von +/-0,25 konstant verläuft. Dabei kann es vorteilhaft sein, wenn LWV' innerhalb einer Toleranz von +/-0,25 einen Wert von 1.5 annimmt.

Es kann weiterhin vorteilhaft sein, wenn LWV' in einem Bereich angrenzend an die Hauptströmungspfadberandung HB in Richtung von HB stetig oder gar progressiv zunimmt.

Es kann weiterhin vorteilhaft sein, wenn LWV' im gesamten Bereich zwischen SLM und HB in Richtung von HB stetig oder gar progressiv zunimmt.

Es kann weiterhin vorteilhaft sein, wenn LWV' an der HB innerhalb einer Toleranz von +/-0,25 einen Wert von 1.5 annimmt.

Betrachtet man schließlich die Schaufelreihengruppe in der Meridionalebene (x-r), so können die Vorderkantenlinie VK(i+1) der hinteren Schaufel und die Hinterkantenlinie HK(i) der vorderen Schaufel abhängig von der spezifischen Schaufelformgebung sehr unterschiedliche Formen zeigen. So kann unter Umständen die VK(i+1) stromaufwärts vor der HK(i) liegen und einen meridionalen Eingriff e besitzen. Der meridionale Eingriff e wird parallel zur Richtung der Meridionalkoordinate m von der Vorderkante einer Schaufel (i+1) zu der Hinterkante einer Schaufel (i) gemessen und hat gegen die Meridionalströmungsrichtung positives Vorzeichen. Wenn die VK(i+1) stromab der HK(i) liegt wird ein meridionaler Eingriff e negativ gezählt.

Es kann vorteilhaft sein, wenn in einem Bereich angrenzend an Hauptströmungspfadberandung HB der meridionale Eingriff e in Richtung der HB steig oder gar progressiv zunimmt. Dabei kann es günstig sein, wenn der meridionale Eingriff mittig (innerhalb einer Toleranz von +/-0,03*dor) zwischen der mittleren Meridionalstromlinie SLM und der Hauptströmungspfadberandung HB das Vorzeichen wechselt. Alternativ kann es dabei günstig sein, wenn der meridionale Eingriff an der HB kleinergleich null bleibt.

Ein besonders günstiges Strömungsverhalten in der erfindungsgemäßen Schaufelgruppe ergibt sich, wenn im Bereich der Schaufelenden an Nabe und Gehäuse angrenzend an die jeweilige Hauptströmungspfadberandung jeweils wenigstens eines der im obigen Text beschriebenen Merkmale vorgesehen ist. Dabei ist es besonders vorteilhaft, wenn im Bereich der Nabe und des Gehäuses mindestens ein gleiches Merkmal oder auch vollständig gleiche Merkmale vorgesehen sind.

**Patentansprüche**

1. Schaufelreihengruppe anordbar in einem Hauptströmungspfad einer Strömungsmaschine und bestehend aus N benachbarten und sowohl in Meridionalrichtung (m) als auch in Umfangsrichtung (u) relativ zueinander fest angeordneten Mitgliedsschaufelreihen, wobei die Anzahl N der Mitgliedsschaufelreihen größer gleich 2 ist und (i) den Laufindex mit Werten zwischen 1 und N kennzeichnet, wobei eine vordere Mitgliedsschaufelreihe mit vorderen Schaufeln (i) mit Vorderkante VK(i) und Hinterkante HK(i) sowie eine hintere Mitgliedsschaufelreihe mit hinteren Schaufeln (i+1) mit Vorderkante VK(i+1) und Hinterkante HK(i+1) gegeben sind, wobei

   - die Schaufelreihengruppe zwei Hauptströmungspfadberandungen (HB) aufweist,
   - wobei in wenigstens einem an eine der Hauptströmungspfadberandungen (HB) angrenzenden Bereich der Schaufelhöhe zwischen dem vorderen Abschnitt der Saugseite einer Schaufel (i+1) der hinteren Mitgliedsschaufelreihe und dem hinteren Abschnitt der Druckseite einer Schaufel (i) der vorderen Mitgliedsschaufelreihe eine Nebenpassage (NP) vorgesehen ist, die die Strömung örtlich führt,
   - wobei in jedem Meridionalstromlinienschnitt (m-u-Ebene) durch die Schaufelgruppe

     ∘ die Sehne der vorderen Schaufel Se(i) und die Sehne der hinteren Schaufel Se(i+1) als die druckseitig an das jeweilige Profil angelegte Tangente gegeben ist,
     ∘ die Profiltiefe l(i) der vorderen Schaufel und die Profiltiefe l(i+1) der hinteren Schaufel in Richtung der jeweiligen Sehne Se(i), Se(i+1) gegeben ist,
     ∘ die Frontschaufelteilung t(i) als der Abstand zweier benachbarter Schaufeln der vorderen Mitgliedsschaufelreihe (i) in deren Hinterkantenebene in Umfangsrichtung (u) definiert ist,
     ∘ der Staffelungswinkel der vorderen Schaufel lambda(i) und der Staffelungswinkel der hinteren Schaufel lambda(i+1) als Neigungswinkel der jeweiligen Sehne Se(i), Se(i+1) gegen die Meridionalrichtung (m) definiert sind,
     ∘ der mittlere Staffelungswinkel lambdam als Mittelwert der Staffelungswinkel lambda(i) und lambda(i+1) definiert ist, gemäß lambdam = (lambda(i)+lambda(i+1)) / 2,

   - wobei in jedem Hinterkantenpunkt H der vorderen Schaufel (i) ein Hilfskoordinatensystem mit einer ersten, einer zweiten und einer dritten Koordinatenrichtung (s, q, or) gegeben ist, die erste Koordinatenrichtung (s) unter dem Winkel lambdam gegen die Meridionalrichtung (m) stromabwärts weist, die zweite Koordinatenrichtung (q) senkrecht zur ersten Koordinatenrichtung (s) von der Druckseite der vorderen Schaufel (i) weg weist, und die dritte Koordinatenrichtung (or) senkrecht auf der ersten Koordinatenrichtung (s) und der zweiten Koordinatenrichtung (q) steht,
   - wobei die Nebenpassagenlänge v als der Abstand zwischen dem Hinterkantenpunkt H der Schaufel (i) und dem Vorderkantenpunkt V der Schaufel (i+1) in Richtung der ersten Koordinatenrichtung (s) gegeben ist und vSLM den Wert auf der mittleren Meridionalstromlinie (SLM) bezeichnet,
   - wobei die normierte Nebenpassagenlänge gemäß vn = v / l(i) definiert ist und vnSLM den Wert auf der mittleren Meridionalstromlinie (SLM) bezeichnet,
   - wobei die relative Nebenpassagenlänge gemäß v' = (v - vSLM) / l(i) definiert ist,
   - wobei die Nebenpassagenweite w als Abstand zwischen dem Hinterkantenpunkt H der Schaufel (i) und einem Punkt P auf der Saugseite der Schaufel (i+1) gegeben ist, wobei sich der Punkt P als Schnittpunkt der im Hinterkantenpunkt H der Schaufel (i) auf der ersten Koordinatenrichtung (s) errichteten Orthogonalen (O) mit der Saugseite der Schaufel (i+1) ergibt, wobei die besagte Orthogonale (O) entgegen der zweiten Koordinatenrichtung (q) weggehend von der Druckseite der Schaufel (i) orientiert ist, wobei die Verbindung aller entlang der Schaufelhöhe in verschiedenen Meridionalstromlinienschnitten ermittelten Punkte P die saugseitige Projektionslinie PLSS(i+1) der hinteren Schaufel (i+1) bildet,
- wobei wSLM den Wert von w auf der mittleren Meridionalstromlinie (SLM) bezeichnet,
- wobei die normierte Nebenpassagenweite gemäß wn = w / (t(i) cos lambdam) gegeben ist und wnSLM den Wert von wn auf der mittleren Meridionalstromlinie (SLM) bezeichnet, und
- wobei die relative Nebenpassagenweite gemäß w' = (w - wSLM) / (t(i) cos lambdam) definiert ist,

**dadurch gekennzeichnet,**
**dass** die relative Nebenpassagenlänge v' und die relative Nebenpassagenweite w' jeweils wenigstens in einem Teil des Bereiches zwischen der mittleren Meridionalstromlinie (SLM) und wenigstens einer der Hauptströmungspfadberandungen (HB) zur Hauptströmungspfadberandung (HB) hin ansteigend vorgesehen sind, wobei die Werte der relativen Nebenpassagenlänge v' und der relativen Nebenpassagenweite w' jeweils an wenigstens einer Hauptströmungspfadberandung (HB) größer sind als an der mittleren Meridionalstromlinie (SLM) in Hauptströmungspfadmitte, wobei in einer Ansicht, die stromaufwärts und parallel zur ersten Koordinatenrichtung (s) im mittleren Meridionalstromlinienschaufelschnitt gerichtet ist, der Wölbungsgrad WGh2 der Hinterkantenlinie HK(i) der vorderen Schaufel (i) im Bereich zwischen der mittleren Meridionalstromlinie (SLM) und der Hauptströmungspfadberandung (HB) größer ist als der Wölbungsgrad WGp der saugseitigen Projektionslinie PLSS(i+1) der hinteren Schaufel (i+1), wobei der Wölbungsgrad WGh2 der Hinterkantenlinie HK(i) als größter feststellbarer Abstand (dh2) zwischen der Hinterkante HK(i) selbst und der geraden Verbindungslinie (Lh2) ihrer Punkte an der mittleren Meridionalstromlinie (SLM) und an der Hauptströmungspfadberandung (HB) bezogen auf die meridionalstromflächenorthogonale Distanz (dor) an der Hinterkantenlinie HK(i) zwischen der Hauptströmungspfadberandung (HB) und der mittleren Meridionalstromlinie (SLM) definiert ist, gemäß WGh2 = dh2 / dor, und der Wölbungsgrad (WGp) der saugseitigen Projektionslinie PLSS(i+1) als größter feststellbarer Abstand (dp) zwischen der Projektionslinie PLSS(i+1) selbst und der geraden Verbindungslinie Lp ihrer Punkte an der mittleren Meridionalstromlinie (SLM) und an der Hauptströmungspfadberandung (HB) bezogen auf die meridionalstromflächenorthogonale Distanz (dor) zwischen der Hauptströmungspfadberandung (HB) und der mittleren Meridionalstromlinie (SLM) definiert ist, gemäß WGp = dp / dor.

2. Schaufelreihengruppe nach Anspruch 1, **dadurch gekennzeichnet, dass** die relative Nebenpassagenlänge v' in einem Bereich angrenzend an die Hauptströmungspfadberandung (HB) zur Hauptströmungspfadberandung (HB) hin durchgehend ansteigt.

3. Schaufelreihengruppe nach Anspruch 1 oder 2, **dadurch gekennzeichnet, dass** der Verlauf der relativen Nebenpassagenlänge v' im Bereich zwischen der mittleren Meridionalstromlinie (SLM) und der Hauptströmungspfadberandung (HB) ein Minimum aufweist.

4. Schaufelreihengruppe nach einem der vorangehenden Ansprüche, **dadurch gekennzeichnet, dass** die Verteilung der relativen Nebenpassagenlänge v' über der Hauptströmungspfadeindringung (HE) gänzlich unterhalb einer oberen Grenzkurve v'o und gänzlich oberhalb einer unteren Grenzkurve v'u verläuft, wobei die obere Grenzkurve v'o gegeben ist durch:

$$v'o = -6 \cdot 10^{-8}(HE)^4 + 4 \cdot 10^{-7}(HE)^3 + 0,0004 \cdot (HE)^2 - 0,0224(HE) + 0,45$$

und die untere Grenzkurve v'u gegeben ist durch:

$$v'u = 5 \cdot 10^{-8}(HE)^4 - 5 \cdot 10^{-6}(HE)^3 + 0,0003 \cdot (HE)^2 - 0,0111(HE) + 0,5.$$

5. Schaufelreihengruppe nach einem der vorangehenden Ansprüche, **dadurch gekennzeichnet, dass** die relative Nebenpassagenweite w' in einem Bereich angrenzend an die Hauptströmungspfadberandung (HB) zur Hauptströmungspfadberandung (HB) hin durchgehend ansteigt.

6. Schaufelreihengruppe nach einem der vorangehenden Ansprüche, **dadurch gekennzeichnet, dass** der Verlauf der relativen Nebenpassagenweite w' im Bereich zwischen der mittleren Meridionalstromlinie (SLM) und der Hauptströmungspfadberandung (HB) ein Minimum aufweist.

7. Schaufelreihengruppe nach einem der vorangehenden Ansprüche, **dadurch gekennzeichnet, dass** die Verteilung der relativen Nebenpassagenweite w' über der Hauptströmungspfadeindringung (HE) gänzlich unterhalb einer oberen Grenzkurve w'o und gänzlich oberhalb einer unteren Grenzkurve w'u verläuft, wobei die obere Grenzkurve w'o gegeben ist durch:

$$w'o = -1 \cdot 10^{-7}(HE)^4 + 7 \cdot 10^{-6}(HE)^3 + 0{,}0001 \cdot (HE)^2 - 0{,}0159(HE) + 0{,}35$$

und die untere Grenzkurve w'u gegeben ist durch:

$$w'u = 8 \cdot 10^{-8}(HE)^4 - 8 \cdot 10^{-6}(HE)^3 + 0{,}0004 \cdot (HE)^2 - 0{,}0108(HE) + 0{,}05.$$

8. Schaufelreihengruppe nach einem der vorangehenden Ansprüche, **dadurch gekennzeichnet, dass** als Maß für die Stärke der strömungsmechanischen Interferenz zwischen einer vorderen Mitgliedschaufel (i) und einer hinteren Mitgliedschaufel (i+1) das Längen- Weiten-Verhältnis LWV der zwischen ihnen gebildeten Nebenpassage NP herangezogen wird, wobei das Längen-Weiten-Verhältnis als LWV = v/w definiert ist, der Wert von LWV im mittleren Meridionalstromlinienschnitt SLM mit LWVSLM bezeichnet ist und das relative Längen-Weiten-Verhältnis gemäß LWV' = LWV - LWVSLM definiert ist, wobei das relative Längen-Weiten-Verhältnis LWV' in einem überwiegenden Bereich angrenzend an den mittleren Meridionalstromlinienschnitt SLM innerhalb einer Toleranz von +/-0,25 konstant verläuft.

9. Schaufelreihengruppe nach einem der vorangehenden Ansprüche, **dadurch gekennzeichnet, dass** in einer Ansicht tangential zur Mittelschnittsmeridionalstromfläche und senkrecht zur ersten Koordinatenrichtung (s) im mittleren Meridionalstromlinienschaufelschnitt SLM die Vorderkantenlinie VK(i+1) der hinteren Schaufel (i+1) im Bereich zwischen der mittleren Meridionalstromlinie (SLM) und der Hauptströmungspfadberandung (HB) einen stärkeren Wölbungsgrad besitzt als die Hinterkantenlinie HK(i) der vorderen Schaufel (i), gemäß WGv > WGh1, wobei der Wölbungsgrad WGh1 der Hinterkantenlinie HK(i) als größter feststellbarer Abstand dh1 zwischen der Hinterkantelinie HK(i) selbst und der geraden Verbindungslinie Lh1 ihrer Punkte an SLM und HB bezogen auf die meridionalstromflächenorthogonale Distanz dor zwischen HB und SLM an der Hinterkantelinie HK(i) definiert ist, gemäß WGh1 = dh1 / dor, und der Wölbungsgrad WGv der Vorderkantenlinie VK(i+1) als größter feststellbarer Abstand dv zwischen der Vorderkantenlinie VK(i+1) selbst und der geraden Verbindungslinie Lv ihrer Punkte an SLM und HB bezogen auf die meridionalstromflächenorthogonale Distanz dor zwischen HB und SLM an der Hinterkantelinie HK(i) definiert ist, gemäß WGv = dv / dor.

10. Schaufelreihengruppe nach einem der vorangehenden Ansprüche, **dadurch gekennzeichnet, dass** die gerade Verbindungslinie Lv der Punkte der Vorderkantenlinie VK(i+1) an SLM und HB stärker gegen die meridionalstromflächenorthogonale Richtung or geneigt ist als die gerade Verbindungslinie Lh1 der Punkte der Hinterkantenlinie HK(i) an SLM und HB.

11. Schaufelreihengruppe nach einem der vorangehenden Ansprüche, **dadurch gekennzeichnet, dass** eine der beiden Linien, Vorderkantenlinie VK(i+1) der hinteren Schaufel (i+1) und Hinterkantenlinie HK(i) der vorderen Schaufel (i), mindestens einen Krümmungswechsel mehr aufweist als die andere der beiden Linien.

12. Schaufelreihengruppe nach einem der vorangehenden Ansprüche, **dadurch gekennzeichnet, dass** die Vorderkantenlinie VK(i+1) der hinteren Schaufel (i+1) mit zwei Krümmungswechseln vorgesehen ist.

13. Schaufelreihengruppe nach einem der vorangehenden Ansprüche, **dadurch gekennzeichnet, dass** die gerade Verbindungslinie Lh2 der Punkte der Hinterkantenlinie HK(i) an SLM und HB stärker gegen die meridionalstromflächenorthogonale Richtung or geneigt ist als die gerade Verbindungslinie Lp der Punkte der saugseitigen Projektionslinie PLSS(i+1) an SLM und HB.

14. Schaufelreihengruppe nach einem der vorangehenden Ansprüche, **dadurch gekennzeichnet, dass** beide Linien, Hinterkantenlinie HK(i) der vorderen Schaufel (i) und saugseitige Projektionslinie PLSS(i+1) der hinteren Schaufel (i+1), mit gleicher Anzahl von Krümmungswechseln vorgesehen sind, und/oder dass die Hinterkantenlinie HK(i) der vorderen Schaufel (i) und die saugseitige Projektionslinie PLSS(i+1) der hinteren Schaufel (i+1) gegensinnig gekrümmt verlaufen.

15. Schaufelreihengruppe nach einem der vorangehenden Ansprüche, **dadurch gekennzeichnet, dass** im Bereich beider Schaufelenden gleichzeitig jeweils wenigstens eines der Merkmale der Ansprüche 1 bis 14 vorgesehen ist.

**Claims**

1. Blade row group arrangeable in a main flow path of a fluid-flow machine and including N adjacent member blade rows firmly arranged relative to each other in both the meridional direction (m) and the circumferential direction (u), with the number N of the member blade rows being greater than/ equal to 2 and (i) designating the running index with values between 1 and N, with a front member blade row with front blades (i) having a leading edge VK(i) and a trailing edge HK(i) as well as a rear member blade row with rear blades (i+1) having a leading edge VK(i+1) and a trailing edge HK(i+1) being provided,

   - wherein the blade row group has two main flow path boundaries (HB),
   - wherein in at least one area of the blade height adjoining one of the main flow path boundaries (HB), between the front section of the suction side of a blade (i+1) in the rear member blade row and the rear section of the pressure side of a blade (i) in the front member blade row, a secondary passage (NP) is provided which guides the flow locally,
   - wherein in each meridional flow line section (m-u plane) through the blade group

     ◦ the chord Se(i) of the front blade and the chord Se(i+1) of the rear blade is defined as the tangent lying on the respective profile on the pressure side,
     ◦ the profile depth l(i) of the front blade and the profile depth l(i+1) of the rear blade are shown in the direction of the respective chord Se(i), Se(i+1),
     ◦ the front blade spacing t(i) is defined as the distance in the circumferential direction (u) between two adjacent blades of the front member blade row (i) in their trailing edge plane,
     ◦ the stagger angle of the front blade lambda(i) and the stagger angle of the rear blade lambda (i+1) are defined as angles of inclination of the respective chord Se(i), Se(i+1) against the meridional direction (m),
     ◦ the mean stagger angle lambdam is defined as the mean value of the stagger angles lambda(i) and lambda(i+1) in accordance with lambdam = (lambda(i) + lambda(i+1)) / 2,

   - wherein in each trailing edge point H of the front blade (i) an auxiliary coordinate system having a first, a second and a third coordinate direction (s, q, or) is provided, with the first coordinate direction (s) facing downstream at the angle lambdam against the meridional direction (m), the second coordinate direction (q), perpendicular to the first coordinate direction (s), facing away from the pressure side of the front blade (i), and the third coordinate direction (or) being perpendicular to the first coordinate direction (s) and to the second coordinate direction (q),
   - wherein the secondary passage length v is defined as the distance between the trailing edge point H of the blade (i) and the leading edge point V of the blade (i+1) in the direction of the first coordinate direction (s), and vSLM identifies the value on the mean meridional flow line (SLM),
   - wherein the standardized secondary passage length is defined in accordance with vn = v / l(i) and vnSLM identifies the value on the mean meridional flow line (SLM),
   - wherein the relative secondary passage length is defined in accordance with v' = (v - vSLM) / l(i),
   - wherein the secondary passage width w is defined as the distance between the trailing edge point H of the blade (i) and a point P on the suction side of the blade (i+1), wherein the point P results as the intersection point of the orthogonal (O) erected in the trailing edge point H of the blade (i) in the first coordinate direction (s) with the suction side of the blade (i+1), wherein said orthogonal (O) is oriented against the second coordinate direction (q) leading away from the pressure side of the blade (i), wherein the connection of all points P determined along the blade height in various meridional flow line sections results in the suction-side projection line PLSS(i+1) of the rear blade (i+1),
   - wherein wSLM identifies the value of w on the mean meridional flow line (SLM),
   - wherein the standardized secondary passage width is defined in accordance with wn = w / (t(i) cos lambdam), and wnSLM identifies the value of wn on the mean meridional flow line (SLM), and
   - wherein the relative secondary passage width is defined in accordance with w' = (w - wSLM) / (t(i) cos lambdam),

   **characterized in that**
   the relative secondary passage length v' and the relative secondary passage width w' are each provided increasing towards the main flow path boundary (HB) at least in one part of the area between the mean meridional flow line (SLM) and at least one of the main flow path boundaries (HB),

wherein the values for the relative secondary passage length v' and the relative secondary passage width w' are, on at least one main flow path boundary (HB), greater than on the mean meridional flow line (SLM) in the main flow path center,

wherein in a view directed upstream and parallel to the first coordinate direction (s) in the mean meridional flow line blade section, the degree of bulge WGh2 of the trailing edge line HK(i) of the front blade (i) in the area between the mean meridional flow line (SLM) and the main flow path boundary (HB) is greater than the degree of bulge WGp of the suction-side projection line PLSS(i+1) of the rear blade (i+1),

wherein the degree of bulge WGh2 of the trailing edge line HK(i) is defined as the greatest ascertainable distance (dh2) between the trailing edge HK(i) itself and the straight connecting line (Lh2) of its points on the mean meridional flow line (SLM) and at the main flow path boundary (HB) relative to the meridional flow surface-orthogonal distance (dor) on the trailing edge line HK(i) between the main flow path boundary (HB) and the mean meridional flow line (SLM), in accordance with WGh2 = dh2 / dor, and the degree of bulge (WGp) of the suction-side projection line PLSS(i+1) is defined as the greatest ascertainable distance (dp) between the projection line PLSS(i+1) itself and the straight connecting line (Lp) of its points on the mean meridional flow line (SLM) and at the main flow path boundary (HB) relative to the meridional flow surface-orthogonal distance (dor) between the main flow path boundary (HB) and the mean meridional flow line (SLM), in accordance with WGp = dp / dor.

2. Blade row group in accordance with Claim 1, **characterized in that** the relative secondary passage length v' in an area adjoining the main flow path boundary (HB) rises continuously towards the main flow path boundary (HB).

3. Blade row group in accordance with Claim 1 or 2, **characterized in that** the course of the relative secondary passage length v' in the area between the mean meridional flow line (SLM) and the main flow path boundary (HB) has a minimum value.

4. Blade row group in accordance with one of the preceding Claims, **characterized in that** the distribution of the relative secondary passage length v' over the main flow path penetration (HE) is completely below an upper limit curve v'o and completely above a lower limit curve v'u, wherein said upper limit curve v'o is provided by:

$$v'o = -6 \cdot 10^{-8}(HE)^4 + 4 \cdot 10^{-7}(HE)^3 + 0{,}0004 \cdot (HE)^2 - 0{,}0224(HE) + 0{,}45$$

and said lower limit curve is provided by:

$$v'u = 5 \cdot 10^{-8}(HE)^4 - 5 \cdot 10^{-6}(HE)^3 + 0{,}0003 \cdot (HE)^2 - 0{,}0111(HE) + 0{,}5.$$

5. Blade row group in accordance with one of the preceding Claims, **characterized in that** the relative secondary passage width w' in an area adjoining the main flow path boundary (HB) rises continuously towards the main flow path boundary (HB).

6. Blade row group in accordance with one of the preceding Claims, **characterized in that** the course of the relative secondary passage width w' in the area between the mean meridional flow line (SLM) and the main flow path boundary (HB) has a minimum value.

7. Blade row group in accordance with one of the preceding Claims, **characterized in that** the distribution of the relative secondary passage width w' over the main flow path penetration (HE) is completely below an upper limit curve w'o and completely above a lower limit curve w'u, wherein said upper limit curve w'o is provided by:

$$w'o = -1 \cdot 10^{-7}(HE)^4 + 7 \cdot 10^{-6}(HE)^3 + 0{,}0001 \cdot (HE)^2 - 0{,}0159(HE) + 0{,}35$$

and said lower limit curve w'u is provided by:

$$w'u = 8 \cdot 10^{-8}(HE)^4 - 8 \cdot 10^{-6}(HE)^3 + 0{,}0004 \cdot (HE)^2 - 0{,}0108(HE) + 0{,}05.$$

8. Blade row group in accordance with one of the preceding Claims, **characterized in that** - as a measure for the intensity of the flow-mechanical interference between a front member blade (i) and a rear member blade (i+1) - the length-width ratio LWV of the secondary passage NP formed between them is used, with the length-width ratio being defined as LWV = v/w, the value of LWV in the mean meridional flow line section SLM being identified with LWVSLM, and the relative length-width ratio being defined in accordance with LWV' = LWV - LWVSLM, wherein the relative length-width ratio LWV' in a predominant area adjoining the mean meridional flow line section SLM is constant within a tolerance of +/-0.25.

9. Blade row group in accordance with one of the preceding Claims, **characterized in that** in a view tangential to the mean meridional flow surface section and perpendicular to the first coordinate direction (s) in the mean meridional flow line blade section SLM, the leading edge line VK(i+1) of the rear blade (i+1) in the area between the mean meridional flow line (SLM) and the main flow path boundary (HB) has a greater degree of bulge than the trailing edge line HK(i) of the front blade (i), in accordance with WGv > WGh1, wherein the degree of bulge WGh1 of the trailing edge line HK(i) is defined as the greatest ascertainable distance dh1 between the trailing edge line HK(i) itself and the straight connecting line Lh1 of its points on SLM and HB relative to the meridional flow surface-orthogonal distance dor between HB and SLM on the trailing edge line HK(i), in accordance with WGh1 = dh1 / dor, and the degree of bulge WGv of the leading edge line VK(i+1) is defined as the greatest ascertainable distance dv between the leading edge line VK(i+1) itself and the straight connecting line Lv of its points on SLM and HB relative to the meridional flow surface-orthogonal distance dor between HB and SLM on the trailing edge line HK(i), in accordance with WGv = dv / dor.

10. Blade row group in accordance with one of the preceding Claims, **characterized in that** the straight connecting line Lv of the points of the leading edge line VK(i+1) on SLM and HB is inclined more greatly against the meridional flow surface-orthogonal direction or than the straight connecting line Lh1 of the points of the trailing edge line HK(i) on SLM and HB.

11. Blade row group in accordance with one of the preceding Claims, **characterized in that** one of the two lines, the leading edge line VK(i+1) of the rear blade (i+1) and the trailing edge line HK(i) of the front blade (i), has at least one curvature change more than the other of the two lines.

12. Blade row group in accordance with one of the preceding Claims, **characterized in that** the leading edge line VK(i+1) of the rear blade (i+1) is provided with two curvature changes.

13. Blade row group in accordance with one of the preceding Claims, **characterized in that** the straight connecting line Lh2 of the points of the trailing edge line HK(i) on SLM and HB is inclined more greatly against the meridional flow surface-orthogonal direction or than the straight connecting line Lp of the points of the suction-side projection line PLSS(i+1) on SLM and HB.

14. Blade row group in accordance with one of the preceding Claims, **characterized in that** both lines, the trailing edge line HK(i) of the front blade (i) and the suction-side projection line PLSS(i+1) of the rear blade (i+1), are provided with the same number of curvature changes, and/or that the trailing edge line HK(i) of the front blade (i) and the suction-side projection line PLSS(i+1) of the rear blade (i+1) have curvatures in opposite directions.

15. Blade row group in accordance with one of the preceding Claims, **characterized in that** in the area of both blade ends at least one of the features of the Claims 1 to 14 is provided at the same time.


**Revendications**

1. Groupe de rangées d'aubes pouvant être disposé dans un chemin d'écoulement principal d'une turbomachine et constitué de N rangées d'aubes membres adjacentes et disposées fixement les unes par rapport aux autres à la fois dans la direction méridionale (m) et dans la direction périphérique (u), le nombre N des rangées d'aubes membres étant supérieur ou égal à 2 et (i) caractérisant l'indice courant avec des valeurs comprises entre 1 et N, une rangée d'aubes membres avant avec des aubes avant (i) avec un bord d'attaque VK(i) et un bord de fuite HK(i) ainsi qu'une rangée d'aubes membres arrière avec des aubes arrière (i+1) avec un bord d'attaque VK(i+1) et un bord de fuite HK(i+1) étant données,

- le groupe de rangées d'aubes présentant deux bords de chemin d'écoulement principal (HB),

- un passage secondaire (NP), qui conduit localement l'écoulement, étant prévu dans au moins une région de la hauteur d'aube adjacente à l'un des bords de chemin d'écoulement principal (HB) entre la portion avant du côté aspiration d'une aube (i+1) de la rangée d'aubes membres arrière et la portion arrière du côté pression d'une aube (i) de la rangée d'aubes membres avant,
- dans chaque coupe linéaire d'écoulement méridionale (plan m-u) à travers le groupe d'aubes

- la corde de l'aube avant Se(i) et la corde de l'aube arrière Se(i+1) étant données en tant que tangentes au profil respectif côté pression,
- la profondeur de profil l(i) de l'aube avant et la profondeur de profil l(i+1) de l'aube arrière dans la direction de la corde respective Se(i), Se(i+1) étant données,
- la division d'aube avant t(i) étant définie comme la distance entre deux aubes adjacentes de la rangée d'aubes membres avant (i) dans leur plan de bord de fuite dans la direction périphérique (u),
- l'angle d'échelonnement de l'aube avant lambda(i) et l'angle d'échelonnement de l'aube arrière lambda(i+1) étant définis en tant qu'angle d'inclinaison de la corde respective Se(i), Se(i+1), par rapport à la direction méridionale (m),
- l'angle d'échelonnement moyen lambdam étant défini comme valeur moyenne des angles d'échelonnement lambda(i) et lambda(i+1), avec lambdam = (lambda(i) + lambda(i+1))/2,

- dans chaque point du bord de fuite H de l'aube avant (i), un système de coordonnées auxiliaire avec une première, une deuxième et une troisième direction de coordonnées (s, q, or) étant donné, la première direction de coordonnées (s) étant orientée vers l'aval suivant l'angle lambdam par rapport à la direction méridionale (m), la deuxième direction de coordonnées (q) étant orientée perpendiculairement à la première direction de coordonnées (s) en s'éloignant du côté pression de l'aube avant (i), et la troisième direction de coordonnées (or) étant perpendiculaire à la première direction de coordonnées (s) et à la deuxième direction de coordonnées (q),
- la longueur du passage auxiliaire v étant donnée comme étant la distance entre le point du bord de fuite H de l'aube (i) et le point du bord d'attaque V de l'aube (i+1) dans la direction de la première direction de coordonnées (s) et vSLM désignant la valeur sur la ligne d'écoulement méridionale médiane (SLM),
- la longueur normée du passage auxiliaire étant définie selon vn = v / l(i) et vnSLM désignant la valeur sur la ligne d'écoulement méridionale médiane (SLM),
- la longueur relative du passage auxiliaire étant définie selon v' = (v - vSLM)/l(i),
- la largeur du passage auxiliaire w étant donnée comme la distance entre le point du bord de fuite H de l'aube (i) et un point P sur le côté aspiration de l'aube (i+1), le point P s'obtenant en tant que point d'intersection de l'orthogonale (O) créée dans le point du bord de fuite H de l'aube (i) sur la première direction de coordonnées (s) avec le côté d'aspiration de l'aube (i+1), ladite orthogonale (O) étant orientée en sens inverse de la deuxième direction de coordonnées (q) en s'éloignant du côté pression de l'aube (i), la liaison de tous les points P déterminés le long de la hauteur de l'aube dans différentes coupes linéaires d'écoulement méridionales formant la ligne en projection côté aspiration PLSS(i+1) de l'aube arrière (i+1),
- wSLM désignant la valeur de w sur la ligne d'écoulement méridionale médiane (SLM),
- la largeur normée du passage secondaire étant donnée selon wn = w / (t(i) cos lambdam) et wnSLM désignant la valeur de wn sur la ligne d'écoulement méridionale médiane (SLM), et
- la largeur relative du passage auxiliaire étant définie selon w' = (w - wSLM) / (t(i) cos lambdam),

**caractérisé en ce que**
la longueur relative du passage auxiliaire v' et la largeur relative du passage auxiliaire w' sont prévues de manière à augmenter à chaque fois au moins dans une partie de la région entre la ligne d'écoulement méridionale médiane (SLM) et au moins l'un des bords du chemin d'écoulement principal (HB) vers le bord du chemin d'écoulement principal (HB), les valeurs de la longueur relative du passage auxiliaire v' et de la largeur relative du passage auxiliaire w' au niveau d'au moins un bord du chemin d'écoulement principal (HB) étant à chaque fois supérieures à celles au niveau de la ligne d'écoulement méridionale médiane (SLM) au centre du chemin d'écoulement principal, dans une vue orientée en amont et parallèlement à la première direction de coordonnées (s) dans la coupe d'aube linéaire d'écoulement méridionale médiane, le degré de courbure WGh2 de la ligne de bord de fuite HK(i) de l'aube avant (i) dans la région entre la ligne d'écoulement méridionale médiane (SLM) et le bord du chemin d'écoulement principal (HB) étant supérieur au degré de courbure WGp de la ligne en projection côté aspiration PLSS(i+1) de l'aube arrière (i+1),
le degré de courbure WGh2 de la ligne de bord de fuite HK(i) étant défini comme la distance (dh2) maximale pouvant être établie entre le bord de fuite HK(i) lui-même et la ligne de liaison droite (Lh2) de ses points sur la ligne d'écoulement méridionale médiane (SLM) et sur le bord du chemin d'écoulement principal (HB) par rapport à la distance perpendiculaire à la surface d'écoulement méridionale (dor) sur la ligne de bord de fuite HK(i) entre le bord du chemin d'écoulement principal (HB) et la ligne d'écoulement méridionale médiane (SLM), selon WGh2 = dh2 / dor, et le degré de courbure (WGp) de la ligne en projection côté aspiration PLSS(i+1) étant défini comme la distance maximale (dp) pouvant être établie entre la ligne en projection PLSS(i+1) elle-même et la ligne de liaison droite Lp de ses points sur la ligne d'écoulement méridionale médiane (SLM) et sur le bord du chemin d'écoulement principal (HB) par rapport à la distance perpendiculaire à la surface d'écoulement méridionale (dor) entre le bord du chemin d'écoulement principal (HB) et la ligne d'écoulement méridionale médiane (SLM), selon WGp = dp / dor.

2. Groupe de rangées d'aubes selon la revendication 1, **caractérisé en ce que** la longueur relative du passage secondaire v' augmente en continu dans une région adjacente au bord du chemin d'écoulement principal (HB) vers le bord du chemin d'écoulement principal (HB).

3. Groupe de rangées d'aubes selon la revendication 1 ou 2, **caractérisé en ce que** l'allure de la longueur relative du passage secondaire v' dans la région entre la ligne d'écoulement méridionale médiane (SLM) et le bord du chemin d'écoulement principal (HB) présente un minimum.

4. Groupe de rangées d'aubes selon l'une quelconque des revendications précédentes, **caractérisé en ce que** la distribution de la longueur relative du passage secondaire v' sur la pénétration du chemin d'écoulement principal (HE) s'étend complètement en dessous d'une courbe limite supérieure v'o et complètement au-dessus d'une courbe limite inférieure v'u, la courbe limite supérieure v'o étant donnée par :

$$v'o = -6 \cdot 10^{-8}(HE)^4 + 4 \cdot 10^{-7}(HE)^3 + 0{,}0004 \cdot (HE)^2 - 0{,}0224(HE) + 0{,}45$$

et la courbe limite inférieure v'u étant donnée par:

$$v'u = 5 \cdot 10^{-8}(HE)^4 - 5 \cdot 10^{-6}(HE)^3 + 0{,}0003 \cdot (HE)^2 - 0{,}0111(HE) + 0{,}5.$$

5. Groupe de rangées d'aubes selon l'une quelconque des revendications précédentes, **caractérisé en ce que** la largeur relative du passage secondaire w' dans une région adjacente au bord du chemin d'écoulement principal (HB) augmente en continu vers le bord du chemin d'écoulement principal (HB).

6. Groupe de rangées d'aubes selon l'une quelconque des revendications précédentes, **caractérisé en ce que** l'allure de la largeur relative du passage secondaire w' dans la région entre la ligne d'écoulement méridionale médiane (SLM) et le bord du chemin d'écoulement principal (HB) présente un minimum.

7. Groupe de rangées d'aubes selon l'une quelconque des revendications précédentes, **caractérisé en ce que** la distribution de la largeur relative du passage secondaire w' sur la pénétration du chemin d'écoulement principal (HE) s'étend complètement en dessous d'une courbe limite supérieure w'o et complètement au-dessus d'une courbe limite inférieure w'u, la courbe limite supérieure w'o étant donnée par :

$$w'o = -1 \cdot 10^{-7}(HE)^4 + 7 \cdot 10^{-6}(HE)^3 + 0{,}0001 \cdot (HE)^2 - 0{,}0159(HE) + 0{,}35$$

et la courbe limite inférieure w'u étant donnée par:

$$w'u = 8 \cdot 10^{-8}(HE)^4 - 8 \cdot 10^{-6}(HE)^3 + 0{,}0004 \cdot (HE)^2 - 0{,}0108(HE) + 0{,}05.$$

8. Groupe de rangées d'aubes selon l'une quelconque des revendications précédentes, **caractérisé en ce qu'**en tant que mesure de l'intensité des interférences mécaniques fluides entre une aube membre avant (i) et une aube membre arrière (i+1), on utilise le rapport longueur-largeur LWV du passage secondaire NP formé entre elles, le rapport longueur-largeur étant défini comme LWV = v/w, la valeur de LWV étant désignée dans la coupe linéaire d'écoulement méridionale médiane SLM par LWVSLM et le rapport relatif longueur-largeur étant défini selon LWV' = LWV - LWVSLM, le rapport relatif longueur-largeur LWV' dans une région majeure adjacente à la coupe linéaire d'écoulement méridionale médiane SLM étant constant dans une plage de tolérances de ±0,25.

9. Groupe de rangées d'aubes selon l'une quelconque des revendications précédentes, **caractérisé en ce que,** dans une vue tangentiellement à la surface d'écoulement méridionale en section médiane et perpendiculairement à la première direction de coordonnées (s) en coupe d'aube linéaire d'écoulement méridionale médiane SLM, la ligne de bord d'attaque VK(i+1) de l'aube arrière (i+1) dans la région entre la ligne d'écoulement méridionale médiane (SLM) et le bord du chemin d'écoulement principal (HB) présente un degré de courbure plus important que la ligne de bord de fuite HK(i) de l'aube avant (i), selon WGv > WGh1,
le degré de courbure WGh1 de la ligne de bord de fuite HK(i) étant défini comme la distance dh1 maximale pouvant être établie entre la ligne de bord de fuite HK(i) elle-même et la ligne de liaison droite Lh1 de ses points sur SLM et HB par rapport à la distance perpendiculaire à la surface d'écoulement méridionale dor entre HB et SLM sur la ligne de bord de fuite HK(i), selon WGh1 = dh1 / dor, et le degré de courbure WGv de la ligne de bord d'attaque VK(i+1) étant défini comme la distance dv maximale pouvant être établie entre la ligne de bord d'attaque VK(i+1) elle-même et la ligne de liaison droite Lv de ses points sur SLM et HB par rapport à la distance perpendiculaire à la surface d'écoulement méridionale dor entre HB et SLM sur la ligne de bord de fuite HK(i), selon WGv = dv / dor.

10. Groupe de rangées d'aubes selon l'une quelconque des revendications précédentes, **caractérisé en ce que** la ligne de liaison droite Lv des points de la ligne de bord d'attaque VK(i+1) sur SLM et HB est inclinée plus fortement vers la direction perpendiculaire à la surface d'écoulement méridionale or que la ligne de liaison droite Lh1 des points de la ligne de bord de fuite HK(i) sur SLM et HB.

11. Groupe de rangées d'aubes selon l'une quelconque des revendications précédentes, **caractérisé en ce que** l'une des deux lignes parmi la ligne de bord d'attaque VK(i+1) de l'aube arrière (i+1) et la ligne de bord de fuite HK(i) de l'aube avant (i) présente au moins un changement de courbure de plus que l'autre des deux lignes.

12. Groupe de rangées d'aubes selon l'une quelconque des revendications précédentes, **caractérisé en ce que** la ligne de bord d'attaque VK(i+1) de l'aube arrière (i+1) est pourvue de deux changements de courbure.

13. Groupe de rangées d'aubes selon l'une quelconque des revendications précédentes, **caractérisé en ce que** la ligne de liaison droite Lh2 des points de la ligne de bord de fuite HK(i) sur SLM et HB est inclinée plus fortement vers la direction perpendiculaire à la surface d'écoulement méridionale or que la ligne de liaison droite Lp des points de la ligne en projection côté aspiration PLSS(i+1) sur SLM et HB.

14. Groupe de rangées d'aubes selon l'une quelconque des revendications précédentes, **caractérisé en ce que** les deux lignes, la ligne de bord de fuite HK(i) de l'aube avant (i) et la ligne en projection côté aspiration PLSS(i+1) de l'aube arrière (i+1), sont pourvues d'un nombre identique de changements de courbure, et/ou **en ce que** la ligne de bord de fuite HK(i) de l'aube avant (i) et la ligne en projection côté aspiration PLSS (i+1) de l'aube arrière (i+1) s'étendent avec des courbures de sens opposés.

15. Groupe de rangées d'aubes selon l'une quelconque des revendications précédentes, **caractérisé en ce que** dans la région des deux extrémités d'aubes, il est prévu simultanément à chaque fois au moins l'une des caractéristiques des revendications 1 à 14.

**Fig. 1**

EP 2 913 478 B1

Fig. 2a

Fig. 2b

**Fig.3**

# Fig. 4a

Fig. 4b

# Fig. 5a

# Fig. 5b

Y-axis: Relative Nebenpassagenlänge v'

X-axis values: 0, 10, 20, 30, 40, 50

Y-axis values: 0,5  0,4  0,3  0,2  0,1  0,0  -0,1

Curve labels: Obere Grenzkurve, v'c, Untere Grenzkurve

HB

Hauptströmungspfadeindringung HE

SLM

EP 2 913 478 B1

Fig. 6a

Relative Nebenpassagenweite w'

Hauptströmungspfad-eindringung HE

Fig. 6b

**Fig. 7a**

EP 2 913 478 B1

# Fig. 7b

Ansicht
B-B

SLM · · · · q · · · s · · · dor

or

VK(i+1)          HK(i)

Lv          dh1

dv          Lh1

HB

SLM · · · · q · · · s · · ·

or

VK(i+1)          HK(i)

Lv          dh1

dv          Lh1

HB

EP 2 913 478 B1

Fig. 7c

Ansicht
B-B

SLM · or · q · s · HK(i) · Lh1 · dh1 · VK(i+1) · Lv · dv · HB · dor

SLM · or · q · s · HK(i) · Lh1 · dh1 · VK(i+1) · Lv · dv · HB

Fig. 8a

Ansicht A-A

# Fig. 8b

EP 2 913 478 B1

Fig. 8c

Ansicht A-A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2261463 A2
- US 20130209223 A1
- US 20130209224 A1